# EUROPÄISCHE PATENTSCHRIFT

(11) **EP 3 671 664 B1**
(45) Veröffentlichungstag und Bekanntmachung des Hinweises auf die Patenterteilung: **30.07.2025**
(21) Anmeldenummer: 18215141.5
(22) Anmeldetag: 21.12.2018
(51) Int. Cl.: G07C 9/00, B65F 1/14

(54) **SYSTEM ZUM BETREIBEN EINES MÜLLCONTAINERS UND VERFAHREN ZUM BETREIBEN EINES MÜLLCONTAINERS**
SYSTEM FOR OPERATING A REFUSE CONTAINER AND METHOD FOR OPERATING A REFUSE CONTAINER
SYSTÈME DE FONCTIONNEMENT D'UN CONTENEUR À ORDURES ET PROCÉDÉ DE FONCTIONNEMENT D'UN CONTENEUR À ORDURES

(43) Veröffentlichungstag der Anmeldung: 24.06.2020
(73) Patentinhaber: emz-Hanauer GmbH & Co. KGaA, 92507 Nabburg (DE)
(72) Erfinder: Alexander, SALOMON, 92536 Pfreimd (DE); Raoul, JANSSEN, 92421 Schwandorf (DE); Gabi, HAHN, 92421 Schwandorf (DE); Johannes, LINDNER, 92536 Pfreimd (DE); Michael, SCHMID, 88499 Riedlingen (DE); Andreas, SÖLDNER, 92286 Rieden (DE)
(74) Vertreter: Hannke Bittner & Partner mbB Regensburg

(56) Entgegenhaltungen:
- EP-A1- 1 818 281
- EP-A1- 2 377 779
- EP-A1- 2 974 984
- EP-B1- 2 377 779
- DE-A1- 102008 005 119
- US-A1- 2014 347 166
- US-A1- 2015 298 903
- US-A1- 2015 307 273

## Beschreibung

Die vorliegende Erfindung betrifft ein System zum Betreiben eines Müllcontainers umfassend einen Müllcontainer, welcher eine elektronische Steuereinrichtung und eine erste Kommunikationsschnittstelle zum Senden und Empfangen von Daten aufweist. Ferner betrifft die Erfindung ein Verfahren zum Betreiben eines Müllcontainers.

Zur Entsorgung von Hausmüll werden oft großräumige Müllcontainer bereitgestellt, welche von mehreren Haushalten benutzt werden. Derartige Müllcontainer können beispielsweise einer Hausgemeinschaft oder auch einer Kommune zugehörig sein. In der Regel sollen nur registrierte Benutzer einen Zugang zu solchen Müllcontainern erhalten, wobei der Zugang gesperrt werden kann, beispielsweise bei Nichtzahlung der Entsorgungskosten. Ein solcher Zugang kann mittels verschiedenster elektronischer Systeme realisiert werden. Einem Nutzer des Müllcontainers muss demnach ein bestimmtes Mittel zur Identifikation zur Verfügung gestellt werden, mittels dem er sich Zugang zu dem Müllcontainer verschaffen kann. Ein solches Mittel zur Identifikation kann ein Kommunikationsgerät, beispielsweise ein Smartphone, sein. Anhand der Identifikationsdaten muss vor dem Öffnen des Zugangs zum Müllcontainer überprüft werden, ob der Nutzer zugangsberechtigt ist. Hierzu ist eine Datenverbindung zu einem Server notwendig, welcher die entsprechenden Identifikations- und Berechtigungsdaten enthält.

Derartige Müllcontainer müssen demnach die Fähigkeit aufweisen, mit einer Vielzahl weiterer Einrichtungen zu kommunizieren. Beispielsweise ist eine Kommunikation mit einem vom Müllcontainer beanstandeten Server notwendig. Ferner ist es notwendig mit dem Kommunikationsgerät zur Identifikation zu kommunizieren. Ein Problem bei derartigen Systemen ist, dass eine solche Kommunikation energieintensiv ist.

Insbesondere bei Müllcontainern, die keiner Hausgemeinschaft zugeordnet sind, sondern im öffentlichen Raum aufgestellt sind, ist die Energieversorgung oft problematisch, da die Energieversorgung vor Zugriff durch unbefugte Personen geschützt werden muss. Außerdem verlangen Energieversorger zur Abrechnung Messgeräte zur Erfassung der benötigten Energie. Die Kosten für diese Messgeräte übersteigen oftmals die Energiekosten um ein Vielfaches, so dass hier alternative Lösungen gewünscht sind. Bisherige Lösungsvorschläge schließen beispielsweise die dezentrale Stromversorgung über Batterien, Solarzellen oder Generatoren (Umwandlung von Windenergie oder mechanischer, durch Benutzer eingebrachter Energie) ein. Diese Lösungen sind jedoch ebenfalls kostenintensiv und vergrößern den Müllcontainer bei gleichem Aufnahmevermögen, was im öffentlichen Raum ebenfalls unerwünscht ist.

Weitere Kosten entstehen aufgrund der oftmals vorgesehenen Nutzung von Mobilfunkverbindungen zur Übertragung von Daten zwischen einem Server und einem Müllcontainer. Der Müllcontainer muss für eine solche Datenübertragung mit einer entsprechenden und stromverbrauchenden Übertragungstechnik ausgerüstet sein. Derartige Müllcontainer sind daher vergleichsweise teuer und benötigen Strom zur Kommunikation über das Mobilfunknetz, wobei diese Kommunikation aufgrund der vom Mobilfunknetzbetreiber erhobenen Entgelte ebenfalls Kosten und Verwaltungsaufwand erzeugt

Derartige Müllcontainer weisen darüber hinaus, neben der Steuereinrichtung, auch weitere interne Einrichtungen auf, beispielsweise eine Verriegelungsvorrichtung oder diverse Sensoren. Demnach muss auch eine interne Kommunikation in dem Müllcontainer stattfinden. Üblicherweise ist hierzu eine aufwendige Verkabelung des Müllcontainers vorgesehen, welche die Kosten des Müllcontainers beeinflusst. Müllcontainer gemäß dem Stand der Technik sind aus EP2974984 A1, US 2015/298903 A1, EP1818281 A1, EP2377779 A1, US2015/307273 A1, DE102008005119 A1 und US2014/347166 A1 bekannt.

Aufgabe der vorliegenden Erfindung ist es daher, ein System zur Verfügung zu stellen, welches die oben genannten Nachteile ausräumt oder zumindest minimiert.

Diese Aufgabe wird durch die unabhängigen Ansprüche, insbesondere das System gemäß Anspruch 1 und das Verfahren gemäß Anspruch 10, gelöst.

Ein wesentlicher Aspekt der Erfindung ist ein System zum Betreiben eines Müllcontainers umfassend einen Müllcontainer, welcher eine elektronische Steuereinrichtung und eine erste Kommunikationsschnittstelle zum Senden und Empfangen von Daten aufweist, wobei über die erste Kommunikationsschnittstelle ein erster Datentransfer zu einer weiteren Kommunikationsschnittstelle initiierbar ist, welche in zumindest einem weiteren Kommunikationsgerät vorgesehen ist, das nicht dem Müllcontainer zugehörig ist, wobei über die erste Kommunikationsschnittstelle ein weiterer Datentransfer zwischen zumindest einer internen Einrichtung initiierbar ist, wobei der erste und der weitere Datentransfer auf einer Drahtlostechnologie beruhen. Ein derartiges System hat zum Vorteil, dass sowohl die Kommunikation mit einem externen Kommunikationsgerät, beispielsweise für eine Nutzeridentifikation, als auch eine Kommunikation mit internen Einrichtungen über eine einzige Kommunikationsschnittstelle erfolgen kann. Demnach kann ein erheblicher Aufwand in Sachen Hardware und Software eingespart werden. Dadurch kann eine einfache effiziente Einbindung unterschiedlicher Komponenten des Müllcontainers gewährleistet werden. Darüber hinaus benutzt die Kommunikationsschnittstelle für die entsprechende Datenübertragung eine Drahtlostechnologie, wodurch eine kostenintensive Verkabelung des Müllcontainers vermieden werden kann.

Erfindungsgemäß sind der erste und der weitere Datentransfer ein unidirektionaler oder aber auch ein bidirektionaler Datentransfer.

Unter einem unidirektionalen Datentransfer ist hierbei zu verstehen, dass Daten lediglich in einer Richtung transferiert werden, also von der ersten Kommunikationsschnittstelle über die weitere Kommunikationsschnittstelle zu der zweiten Kommunikationsschnittstelle oder von der zweiten Kommunikationsschnittstelle über die weitere Kommunikationsschnittstelle zu der ersten Kommunikationsschnittstelle. Unter einem bidirektionalen Datentransfer ist hierbei zu verstehen, dass ein Datenaustausch in beiden Richtungen erfolgt. Durch die Möglichkeit eines bidirektionalen Datentransfers können sowohl Daten von der internen Einrichtung an die erste Kommunikationsschnittstelle und darüber hinaus an weitere interne Einrichtungen, wie beispielsweise die Steuereinrichtung, oder sogar an externe Einrichtungen, wie beispielsweise einem Server, übermittelt werden. Umgekehrt können ebenso von diesen Einrichtungen Daten an die interne Einrichtung übermittelt werden. Solche Daten können beispielsweise Software- oder Firmwareupdates sein.

Unter einem Müllcontainer kann ein sogenannter Restmüllcontainer oder aber auch Wertstoffsammelbehälter, wie beispielsweise Papier-, Flaschen- oder Kunststoffsammelbehälter verstanden werden.

Die Begriffe "erster Datentransfer", "weiterer Datentransfer" und "die weiter folgenden Datentransfers" sind nicht derart zu verstehen, dass diese zeitlich aufeinanderfolgend wären. Vielmehr soll unter diesen Bezeichnungen eine bestimmte Art von Datentransfers verstanden werden.

Erfindungsgemäß besteht eine Kommunikationsverbindung zwischen der ersten Kommunikationsschnittstelle und der Steuereinrichtung sowie zwischen der Steuereinrichtung und einer Speichereinrichtung, welche der Müllcontainer aufweist. Eine solche Kommunikationsverbindung ist vorteilhafterweise drahtgebunden.

Erfindungsgemäß umfasst der Müllcontainer zumindest eine Sensoreinrichtung, welche eine interne Einrichtung darstellt. Vorzugsweise ist der weitere Datentransfer ein sechster Datentransfer, welcher zwischen der zumindest einen Sensoreinrichtung und der ersten Kommunikationsschnittstelle über einen fünften Kommunikationskanal erfolgen kann. Vorzugsweise kann der sechste Datentransfer unidirektional oder bidirektional sein. Ein bidirektionaler Datentransfer erlaubt beispielsweise das Übertragen von Software- oder Firmwareupdates auf die zumindest eine Sensoreinrichtung.

Die zumindest eine Sensoreinrichtung könnte vorteilhafterweise einen Sensor zur Überwachung der Temperatur im Innenraum des Müllcontainers aufweisen. Durch eine solche Überwachung kann das Entstehen eines Brandes in dem Container schnell detektiert und gemeldet werden.

Ferner könnte die Sensoreinrichtung einen Füllstandssensor aufweisen, wodurch rechtzeitige Leerungen gewährleistet werden. Der Füllstandssensor kann eine sonographische oder eine optische Füllhöhenermittlung durchführen.

Möglich wäre auch, dass die Sensoreinrichtung einen Bewegungssensor für Bewegungen im Innenraum des Müllcontainers aufweist. Somit könnten beispielsweise eingeschlossene Tiere detektiert werden.

Auch ein Sensor zur Detektion von Bewegungen des Müllcontainers selbst oder ein Sensor zur Detektion von Krafteinwirkungen auf den Müllcontainer könnte vorgesehen sein. Durch derartige Sensoren könnte Vandalismus erkannt und gemeldet werden.

Ferner könnte ein Gewichtssensor vorgesehen sein, welcher das Gewicht des eingeworfenen Mülls detektiert. Ein solcher Sensor könnte dazu genutzt werden, die Kostenabrechnung für den Benutzer aufgrund des Gewichts des eingeworfenen Mülls zu bemessen. Somit wäre eine "gerechte" Kostenabrechnung für die Benutzer ermöglicht.

Es wäre auch denkbar, Sensoren bereitzustellen, welche den Einwurf bestimmter Materialien, wie beispielsweise Metalle, detektieren. Bei einem Restmüllcontainer könnte somit der unerlaubte Einwurf solcher Materialien detektiert werden.

Weiterhin kann die Sensoreinrichtung ein Geruchssensor sein, womit einer zu hohen Geruchsbelastung der Umgebung des Müllcontainers vorgebeugt werden kann, indem eine vor-zeitige Leerung durchgeführt wird.

Schließlich kann die Sensoreinrichtung auch ein Geräuschsensor sein.

Nach einer weiteren bevorzugten Ausführungsform ist die zumindest eine Sensoreinrichtung eine Standortbestimmungseinrichtung, mittels welcher der Standort des Müllcontainers bestimmt werden kann. Durch eine solche Standortbestimmungseinrichtung ist der Müllcontainer beispielsweise nach einem Diebstahl oder Vandalismus wieder auffindbar. Eine solche Standortbestimmungseinrichtung könnte beispielsweise eine GPS-Einrichtung sein.

Zur Standortbestimmung können vorteilhafterweise auch BSSID- (Basic Service Set Identification-) Daten von sich in der Umgebung des Müllcontainers befindlichen WLAN-Accesspoints durch eine geeignete Standortbestimmungseinrichtung abgefragt werden. Solche BSSID-Daten können dann an den Server übertragen werden. Diese können dann durch den Server derart ausgewertet werden, dass der Standort des Müllcontainers bestimmbar ist.

Erfindungsgemäß ist der weitere Datentransfer ein siebter Datentransfer. Erfindungsgemäß werden mittels des siebten Datentransfers Steuerdaten an die zumindest eine interne Einrichtung in Form einer Verriegelungseinrichtung des Müllcontainers übermittelt. Erfindungsgemäß erfolgt der siebte Datentransfer über einen sechsten Kommunikationskanal und ist unidirektional oder bidirektional. Bevorzugt kann eine andere interne Einrichtung ein Aktuator, eine Verriegelungseinrichtung, eine Anzeigeeinrichtung, eine Ausgabeeinrichtung oder ein Feuerlöscher sein.

Der siebte Datentransfer über den sechsten Kommunikationskanal beruht vorzugsweise auf einer Drahtlostechnologie. Es kann jedoch auch notwendig sein, dass ein alternativer Datentransfer stattfindet zwischen der ersten Kommunikationsschnittstelle und einer genannten weiteren internen Einrichtung, welche auf einen kabelgebundenen Kommunikationskanal übertragen wird.

Erfindungsgemäß sind die Steuerdaten aufgrund eines Auslöseereignisses erzeugbar. Bevorzugt sind die Steuerdaten zumindest teilweise durch die Steuereinrichtung und/oder zumindest teilweise durch eine Sensoreinrichtung erzeugbar. Ein solches Auslöseereignis kann von vielfältiger Gestalt sein. Es kann beispielsweise auf bestimmten Sensordaten beruhen. Demnach würden durch die Detektion eines bestimmten Umstands, wie Temperatur, Hitze, Füllstand, durch einen Sensor bestimmte Sensordaten erzeugt, welche dann vorteilhafterweise ganz oder teilweise durch die Steuereinrichtung ausgewertet werden. Aufgrund der Auswertung können dann entsprechende Steuerdaten erzeugt werden, die an die bestimmte Einrichtung übermittelt werden.

Es wäre jedoch auch denkbar, dass die Sensoreinrichtung bereits eine Auswerteeinrichtung aufweist, welche die Sensordaten zumindest teilweise auswertet und zumindest teilweise die Steuerdaten erzeugt. Diese Steuerdaten werden dann über die erste Kommunikationsschnittstelle und gegebenenfalls über die Steuereinrichtung und erste Kommunikationseinrichtung an die bestimmte Einrichtung übermittelt.

Die Auswertung der Steuerdaten kann bevorzugt jedoch auch durch einen vom Müllcontainer beabstandeten Server erfolgen, welcher zunächst die Sensordaten durch die erste Kommunikationsschnittstelle erhalten hat. Die Steuerdaten werden dann über die erste Kommunikationsschnittstelle mittels des siebten Datentransfers an die zumindest eine interne oder die zumindest eine externe Einrichtung übermittelt.

Beispielsweise könnte der Füllstandssensor einen bestimmten Füllstand messen, welcher keinen weiteren Einwurf mehr erlauben würde. Die dem Füllstand entsprechenden Sensordaten würden dann durch entweder die Sensoreinrichtung, die Steuereinrichtung den Server oder eine anderweitige Auswerteeinrichtung ausgewertet werden. Die entsprechend generierten Steuerdaten werden dann an die interne Einrichtung in Form einer Verriegelungseinrichtung übermittelt, so dass diese den Müllcontainer verriegelt, wodurch ein weiterer Einwurf verhindert wird. Gleichzeitig könnte eine weitere interne oder externe Einrichtung in Form einer Anzeige- oder Ausgabeeinrichtung aktiviert werden, welche anzeigt, dass der Müllcontainer gerade nicht nutzbar ist.

Analog könnte ein Brand in oder nahe des Müllcontainers mittels eines Geruchs- oder Temperatursensors festgestellt werden. Die entsprechend generierten Steuerdaten würden dann an einen internen oder externen Feuerlöscher übermittelt, welcher dadurch aktiviert werden würde.

Das Auslöseereignis kann vorteilhafterweise jedoch auch ein Datentransfer, ein bloßes Erkennen eines bestimmten Kommunikationsgeräts, ein Ablaufen eines vorbestimmten Zeitintervalls oder ähnliches sein.

Erfindungsgemäß umfasst das weitere Kommunikationsgerät ein erstes Kommunikationsgerät, welches die weitere Kommunikationsschnittstelle in Form einer dritten Kommunikationsschnittstelle umfasst. Erfindungsgemäß ist ein Entleer- oder Servicefahrzeug mit dem ersten Kommunikationsgerät ausgestattet. Erfindungsgemäß stellt dabei ein Datentransfer, vorteilhafterweise mittels einer Drahtlostechnologie, zwischen der ersten Kommunikationsschnittstelle und der dritten Kommunikationsschnittstelle ein Auslöseereignis dar. Vorzugsweise erzeugt die Steuereinrichtung aufgrund des Auslöseereignisses Steuerdaten, welche der internen Einrichtung in Form einer Verriegelungseinrichtung übermittelt werden, woraufhin die Verriegelungseinrichtung entriegelt. Demnach kann das System vorteilhafterweise eine automatische Entriegelung des Müllcontainers bei einem Entleerungsvorgang bereitstellen. Bisher wird ein solches Entriegeln aufgrund einer Detektion eines Anhebevorgangs angewiesen. Vorliegend kann das Entleer- oder Servicefahrzeug, beziehungsweise das erste Kommunikationsgerät, bereits durch einen Datentransfer erkannt werden. Erfindungsgemäß findet nach dem Etablieren einer Kommunikationsverbindung zwischen der ersten Kommunikationsschnittstelle und der zweiten Kommunikationsschnittstelle eine Autorisierung statt. Hierbei erkennt die Steuereinrichtung das Vorhandensein eines Entleerungsfahrzeugs und gibt entsprechende Steuerdaten über die erste Kommunikationsschnittstelle an die entsprechende Verriegelungseinrichtung weiter. Eine solche Erkennung kann beispielsweise durch ein "Handschake" bei einer NFC-Verbindung oder einem sogenannten "Pairing" bei einer Bluetooth^{®}-Verbindung erfolgen.

Nach dem Entleerungsvorgang kann das Entfernen des Entleerungsfahrzeugs detektiert werden, woraufhin die Steuereinrichtung entsprechende Steuerdaten über die erste Kommunikationsschnittstelle an die entsprechende Verriegelungseinrichtung zur Verriegelung ausgibt. Eine bevorzugte Ansteuerung von externen Einrichtungen mittels der Drahtlostechnologie kann beispielsweise eine Ansteuerung einer Schranke sein, welche die Anfahrt zu dem Müllcontainer versperrt. Nach einem Erkennen eines Entleer- oder Servicefahrzeugs mittels eines auf einer Drahtlostechnologie beruhenden Datentransfers zwischen der ersten Kommunikationsschnittstelle und der dritten Kommunikationsschnittstelle können einer solchen Schranke entsprechende Steuerdaten übermittelt werden, wodurch die Durchfahrt des Entleer- oder Servicefahrzeugs gewährt wird.

Erfindungsgemäß weist das System einen von dem Müllcontainer beabstandeten Server auf, welcher eine zweite Kommunikationsschnittstelle umfasst. Erfindungsgemäß weist die erste Kommunikationsschnittstelle keine Einrichtung zur direkten Datenübertragung an die zweite Kommunikationsschnittstelle auf. Erfindungsgemäß ist ein indirekter erster Datentransfer zwischen der ersten Kommunikationsschnittstelle und der zweiten Kommunikationsschnittstelle und/oder zwischen der zweiten Kommunikationsschnittstelle und der ersten Kommunikationsschnittstelle über die zumindest eine weitere Kommunikationsschnittstelle initiierbar.

Erfindungsgemäß sind durch die Steuereinrichtung nach einer Nutzung des Müllcontainers Benutzungsdaten in einer dem Müllcontainer zugehörigen Speichereinrichtung ablegbar. Erfindungsgemäß sind die gespeicherten Benutzungsdaten über den ersten Datentransfer an den Server übertragbar. Ein derartiges System hat zum Vorteil, dass der Müllcontainer keine leistungsstarke Kommunikationsschnittstelle umfassen muss, mittels welcher die direkte Kommunikation (z.B. über ein Mobilfunknetz) mit dem Server ermöglicht wird. Vielmehr ist vorgesehen, dass zum Datenaustausch zwischen Müllcontainer und Server Kommunikationskanäle benutzt werden, welche von einem weiteren Kommunikationsgerät bereitgestellt werden, welches nicht dem Müllcontainer zugehörig ist. Der Energiebedarf für die Übertragung der Daten über ein vorzugsweise, zumindest abschnittsweise, drahtloses Netzwerk an den Server wird demnach durch das weitere Kommunikationsgerät getragen. Ebenso fallen die bei der Übertragung anfallenden Netz-Nutzungsentgelte dem weiteren Kommunikationsgerät zur Last. Von dem Müllcontainer bzw. dessen (erster) Kommunikationsschnittstelle ist somit lediglich eine Übertragung von Daten bis zu dem weiteren Kommunikationsgerät notwendig. Vorzugsweise ist ein derartiges Kommunikationsgerät ausgewählt aus bestimmten Kommunikationsgeräten, welche sich in unmittelbarer Nähe zu dem Müllcontainer beziehungsweise sich in regelmäßigen Abschnitten zu dem Müllcontainer befinden. Die Daten würden demnach von der ersten Kommunikationsschnittstelle und der zweiten Kommunikationsschnittstelle in beiden Richtungen ausgetauscht werden können, wobei erfindungsgemäß der Datentransfer über die weitere Kommunikationsschnittstelle erfolgt.

Die mittels des ersten Datentransfers übertragenen Daten können grundsätzlich verschiedenster Natur sein.

Die übertragenen Daten können Benutzerdaten sein, welche in der Speichereinrichtung abgelegt sind. Derartige Benutzerdaten sind Daten, welche durch die Nutzung des Müllcontainers anfallen. Diese können Benutzerdaten eines einzelnen Nutzers sein oder die Benutzerdaten mehrerer Nutzer umfassen, welche seit dem letzten ersten Datentransfer den Müllcontainer benutzt haben. Typischerweise werden die Benutzerdaten unidirektional von der ersten Kommunikationsschnittstelle über die weitere Kommunikationsschnittstelle zu der zweiten Kommunikationsschnittstelle übertragen.

Nach einer Ausführungsform kann eine Identifikation des Nutzers mittels eines Kommunikationsgeräts erfolgen, welches selbst keine Kommunikationsverbindung mit dem Server hat. Bei einer solchen Offline-Nutzung werden entsprechende Benutzerdaten durch die Steuereinrichtung in der Speichereinrichtung des Müllcontainers abgelegt. Derartige Benutzerdaten können folgende Daten umfassen: Identifikationsdaten, Daten über die Art und das Gewicht des eingeworfenen Mülls, Einwurfzeiten usw.

Nach einer weiteren Ausführungsform erfolgt eine Identifikation des Nutzers mittels eines Kommunikationsgeräts, welches selbst eine Kommunikationsverbindung zu dem Server hat. Hier kann vorteilhafterweise die Identifikation des Nutzers durch das Kommunikationsgerät mittels einer Kommunikation des Kommunikationsgeräts mit dem Server erfolgen. Bevorzugt können demnach die Benutzerdaten über dieses Kommunikationsgerät an den Server übermittelt werden. Es ist jedoch von Vorteil, wenn bei einer solchen Online-Nutzung eine Sicherungskopie der Benutzerdaten durch die Steuereinrichtung in der Speichereinrichtung des Müllcontainers abgelegt wird. Diese Sicherungskopien können dann bei einem nächsten ersten Datentransfer dem Server übertragen werden und diesem zur Verifikation der ursprünglich übertragenen Daten dienen. Derartige Benutzerdaten können ebenso folgende Daten umfassen: Identifikationsdaten, Daten über die Art und das Gewicht des eingeworfenen Mülls, Einwurfzeiten usw.

Die mittels des ersten Datentransfers an den Sever übertragenen Daten können vorteilhafterweise auch Sensordaten umfassen, welche von Sensoren stammen, die in dem Müllcontainer vorhanden sind oder sich in der Nähe des Müllcontainers befinden. Solche Daten würden vorzugsweise von der ersten Kommunikationsschnittstelle über die weitere Kommunikationsschnittstelle zu der zweiten Kommunikationsschnittstelle übertragen werden.

Darüber hinaus wäre es denkbar, Zeitdaten, Systeminformationen, Nutzungsverhalten, (erfolglose) Nutzungsversuche, (erfolglose) Anmeldeversuche mittels des ersten Datentransfers zu übermitteln. Solche Daten würden vorzugsweise von der ersten Kommunikationsschnittstelle über die weitere Kommunikationsschnittstelle zu der zweiten Kommunikationsschnittstelle übertragen werden.

Die mittels des ersten Datentransfers übermittelten Daten können auch Software- oder Firmwareupdates für entsprechende Komponenten des Müllcontainers umfassen, welche durch den Server bereitgestellt werden. Solche Daten würden vorzugsweise von der zweiten Kommunikationsschnittstelle über die weitere Kommunikationsschnittstelle zu der ersten Kommunikationsschnittstelle übertragen werden. Dazu wäre es denkbar, dass einzelne Pakete über unterschiedliche Kommunikationsgeräte auf die Speichereinrichtung des Müllcontainers übertragen werden.

Vorzugsweise können die mittels des ersten Datentransfers übermittelten Daten weiterhin Zugangslisten, sogenannte weiße oder schwarze Listen, umfassen. In solchen Zugangslisten sind die Berechtigungen der Nutzer aufgeführt. Dies ist insbesondere relevant für die genannte Offline-Nutzung. Steht beispielsweise die Zahlung der entsprechenden Gebühren bei einem Nutzer aus, kann dessen Berechtigung entzogen werden.

Denkbar wäre es auch, dass die genannten übermittelten Daten Teil eines bidirektionalen Datentransfers sind. Der Server könnte beispielsweise zunächst eine Anfrage hinsichtlich bestimmter Daten an den Müllcontainer übermitteln, woraufhin dieser die angeforderten Daten bereitstellt. Es wäre auch denkbar, dass mittels des ersten Datentransfers eine Ferndiagnose durch den Server bei Störungen oder Fehlfunktionen der Systeme des Müllcontainers durchgeführt werden.

Erfindungsgemäß umfasst ein erstes Kommunikationsgerät eine dritte Kommunikationsschnittstelle. Erfindungsgemäß erfolgt der unidirektionale oder bidirektionale erste Datentransfer zwischen der ersten Kommunikationsschnittstelle und der zweiten Kommunikationsschnittstelle über die dritte Kommunikationsschnittelle. Erfindungsgemäß ist ein Entleer- oder Servicefahrzeug mit dem ersten Kommunikationsgerät ausgestattet. Erfindungsgemäß ist das erste Kommunikationsgerät ein Teil einer Recheneinheit, eines sogenannten On Board Computers (OBC) des Entleer- oder Servicefahrzeugs. Da derartige Entleer- oder Servicefahrzeuge zwangsläufig in regelmäßigen Abständen in unmittelbare Nähe des Müllcontainers kommen, ist ein erster Datentransfer über ein Kommunikationsgerät, welches sich in einem solchen Fahrzeug befindet, besonders vorteilhaft. Darüber hinaus kann ein solches Fahrzeug dem ersten Kommunikationsgerät ohne Probleme eine ausreichende Energieversorgung zur Verfügung stellen. Bevorzugt erfolgt der Datentransfer zwischen der ersten und der dritten Kommunikationsschnittstelle über einen ersten Kommunikationskanal.

Nach einer weiteren bevorzugten Ausführungsform umfasst ein zweites Kommunikationsgerät eine vierte Kommunikationsschnittstelle. Vorzugweise kann der unidirektionale oder bidirektionale erste Datentransfer zwischen der ersten Kommunikationsschnittstelle und der zweiten Kommunikationsschnittstelle über die vierte Kommunikationsschnittelle erfolgen. Vorteilhafterweise ist das zweite Kommunikationsgerät einem Benutzer zugeordnet. Vorzugsweise ist das zweite Kommunikationsgerät ein portables Datenverarbeitungsgerät, bevorzugt mit einer Anzeigeeinrichtung, beispielsweise ein Mobiltelefon, ein Smartphone, ein Tablet oder ein Laptop. Eine derartige Ausgestaltung hat den Vorteil, dass ein Benutzer des Müllcontainers ein solches zweites Kommunikationsgerät, wie beispielsweise ein Smartphone, bereits für den Identifikationsvorgang bei der Online-Nutzung verwenden kann. Insbesonders ein Smartphone ist als Kommunikationsgerät bevorzugt, da es weit verbreitet ist und eine Vielzahl von Kommunikationsschnittstellen aufweist, die zur Ausbildung einer Datenverbindung zum Müll-container einerseits und/oder Server andererseits genutzt werden könnten. Außerdem weist ein Smartphone eine Anzeigeeinrichtung auf, über welche Informationen an den Benutzer gesendet werden könnten. Bevorzugt erfolgt der Transfer von Daten zwischen der ersten und der vierten Kommunikationsschnittstelle über einen zweiten Kommunikationskanal.

Erfindungsgemäß erfolgt der unidirektionale oder bidirektionale erste Datentransfer zwischen der ersten Kommunikationsschnittstelle und der zweiten Kommunikationsschnittstelle sowohl über das erste Kommunikationsgerät, beziehungsweise die dritte Kommunikationsschnittelle, als auch über das zweite Kommunikationsgerät, beziehungsweise die vierte Kommunikationsschnittstelle.

Die vorliegende Erfindung ist jedoch nicht beschränkt auf eine bestimmte Art von Kommunikationsgerät. Ein entsprechendes Kommunikationsgerät muss lediglich eine weitere Kommunikationsschnittstelle aufweisen, welche dazu in der Lage ist, mit der ersten Kommunikationsschnittelle des Müllcontainers und der zweiten Kommunikationsschnittstelle des Servers zu kommunizieren und die Daten entsprechend weiterzuleiten.

Unter einem Kommunikationskanal soll ein Übertragungsweg verstanden werden. Ein solcher Übertragungsweg verbindet einen Sender und einen Empfänger. Dieser Sender beziehungsweise Empfänger ist vorteilhafterweise Teil der jeweiligen Kommunikationsschnittstelle oder einer entsprechenden weiteren Einrichtung. Demzufolge ist es vorteilhaft, wenn das Kommunikationsgerät und der Müllcontainer mit einem entsprechenden Sender beziehungsweise Empfänger der jeweiligen Technologie ausgestattet sind. Bevorzugt sind komplementäre Sender-Empfänger-Paare im Müllcontainer und Kommunikationsgerät sowie Kommunikationsgerät und Server vorhanden. Ein komplementäres Sender-Empfänger-Paar im Müllcontainer und Server ist nicht erforderlich und bevorzugt auch nicht vorhanden.

Nach einer weiteren bevorzugten Ausführungsform ist zur Identifizierung eines Benutzers vor der Nutzung des Müllcontainers zwischen der ersten Kommunikationsschnittstelle und der vierten Kommunikationsschnittstelle ein zweiter Datentransfer initiierbar. Vorteilhafterweise erfolgt der zweite Datentransfer zwischen der ersten und der vierten Kommunikationsschnittstelle über den zweiten Kommunikationskanal. Der zweite Datentransfer ist vorzugsweise bidirektional und kann Identifikationsdaten des Nutzers und/oder Identifikationsdaten des zur Nutzung vorgesehenen Müllcontainers aufweisen. Bevorzugt erfolgt nach dem zweiten Datentransfer ein dritter Datentransfer zwischen der vierten Kommunikationsschnittstelle des zweiten Kommunikationsgeräts und der zweiten Kommunikationsschnittstelle des Servers. Dieser dritte Datentransfer umfasst vorteilhafterweise die Identifikationsdaten des Benutzers und/oder Identifikationsdaten des zur Nutzung vorgesehenen Müllcontainers. Bevorzugt erfolgt der dritte Datentransfer zwischen der vierten Kommunikationsschnittstelle und der zweiten Kommunikationsschnittstelle über einen achten Kommunikationskanal.

Vorzugsweise weist der Server weiterhin einen Authentifizierungsmanager und eine Datenbank auf. Bevorzugt ordnet der Authentifizierungsmanager den empfangenen Identifikationsdaten Berechtigungsdaten des Benutzers, welche in der Datenbank gespeichert sind, zu. Auf Basis dieser Zuordnung kann der Zugang zu dem zur Nutzung vorgesehenen Müllcontainer für diesen Benutzer freigegeben oder verweigert werden. Die entsprechenden Berechtigungsdaten werden vorzugsweise von der zweiten Kommunikationsschnittstelle über die vierte Kommunikationsschnittstelle an die erste Kommunikationsschnittstelle des Müllcontainers übermittelt. Die Steuereinrichtung des Müllcontainers kann dann vorteilhafterweise aufgrund der Berechtigungsdaten den Zugang zu dem Müllcontainer veranlassen. Ein solcher Identifikationsvorgang wird vorzugsweise als Online-Nutzung bezeichnet.

Nach einer weiteren bevorzugten Ausführungsform umfasst der Müllcontainer eine Empfangseinrichtung, welche eine interne Einrichtung darstellt. Vorzugsweise kann zwischen der Empfangseinrichtung und der ersten Kommunikationsschnittstelle der weitere Datentransfer in Form eines ein vierten Datentransfers über einen dritten Kommunikationskanal erfolgen. Unter einer Empfangseinrichtung ist eine Einrichtung zu verstehen, welche dazu geeignet ist, Identifikationsdaten eines Nutzers zu empfangen. Der vierte Datentransfer kann ebenso ein unidirektionaler oder ein bidirektionaler Datentransfer sein.

Bevorzugt ist zur Identifizierung eines Benutzers vor der Nutzung des Müllcontainers zwischen der Empfangseinrichtung und einer Identifikationseinrichtung mittels eines vierten Kommunikationskanals ein fünfter Datentransfer von Identifikationsdaten initiierbar. Für die Identifikation des Nutzers wird hierbei keine Datenverbindung zu dem Server hergestellt. Eine solche Nutzung wird vorteilhafterweise als Offline-Nutzung bezeichnet.

Vorteilhafterweise kann eine solche Identifikationseinrichtung ein Sender sein, welcher mittels einer Drahtlostechnologie die Identifikationsdaten des Benutzers übermittelt. Vorteilhafterweise wird ein bestimmter Code oder ähnliches mittels des fünften Datenaustausches an das Empfangsgerät übermittelt. Die Identifikationseinrichtung kann ein eigens für die Nutzung des Müllcontainers vorgesehener Sender sein, welche den Nutzern durch den Betreiber zur Verfügung gestellt wird.

Es wäre jedoch auch denkbar, dass die Identifikationseinrichtung ein passives Element, beispielsweise eine (RFID)-Chipkarte, Magnetkarte oder Ähnliches, ist. Auf einem solchen passiven Element sind die Identifikationsdaten enthalten oder gespeichert. Die Empfangseinrichtung wäre in diesem Fall ein aktives Element, welches die Identifikationsdaten von der Identifikationseinrichtung ausliest. Auch eine solche Identifikationseinrichtung kann den Nutzern eigens für die Nutzung des Müllcontainers durch den Betreiber zur Verfügung gestellt werden.

Es wäre jedoch auch denkbar, dass die Identifikationseinrichtung ein zweites Kommunikationsgerät, beispielsweise ein Smartphone, ist. Einige Nutzer bevorzugen eine Offline-Nutzung, wollen sich jedoch trotzdem mit einem zweiten Kommunikationsgerät identifizieren, da ein solches, beispielsweise ein Smartphone, in der Regel immer zur Hand ist. Typischerweise weist das zweite Kommunikationsgerät, wie Smartphone oder ähnliche Geräte, Funktionen auf, welche zur Übermittlung entsprechender Identifikationsdaten an das Empfangsgerät fähig sind.

Es wäre auch denkbar, dass eine solche Empfangseinrichtung dazu geeignet ist, anderweitige Identifikationsdaten des Nutzers zu empfangen. So kann das Empfangsgerät ein Eingabegerät für einen Code, beispielsweise einen Ziffernblock, sein. Das Empfangsgerät kann auch ein Lesegerät für biometrische Daten wie Fingerabdrücke oder Iris-Erkennung oder ein Gerät zur Gesichtserkennung sein.

Die durch die Empfangseinrichtung empfangenen Daten werden über den vierten Datentransfer mittels des dritten Kommunikationskanals an die erste Kommunikationsschnittstelle und weiterhin an die Steuereinrichtung übermittelt. Der dritte Kommunikationskanal nutzt vorzugsweise eine Drahtlostechnologie. Demnach kann das Empfangsgerät an einer beliebigen Stelle auch in unmittelbarer Nähe außerhalb des Müllcontainers platziert werden. Ferner kann eine kostenintensive Verkabelung eingespart werden.

Der vierte Datentransfer kann unidirektional sowie auch bidirektional sein. Ein bidirektionaler Datentransfer erlaubt beispielsweise das Übertragen von Software- oder Firmwareupdates auf die Empfangseinrichtung.

Die durch die Offline-Nutzung anfallenden Benutzerdaten werden durch die Steuereinrichtung in der Speichereinrichtung des Müllcontainers abgelegt. Diese Benutzerdaten können vorteilhafterweise mittels des nächsten ersten Datentransfers and den Server übertragen werden.

Durch den Server können dann anhand der Benutzerdaten Rechnungen, Statistiken oder Ähnliches erstellt werden.

Vorteilhafterweise ist zur Offline-Nutzung zumindest eine Zugangsliste, eine sogenannte weiße oder schwarze Liste, in der Speichereinrichtung abgelegt. Eine solche Zugangsliste umfasst Berechtigungsdaten der Nutzer. Bevorzugt werden die durch die Empfangseinrichtung empfangenen Identifikationsdaten durch die Steuereinrichtung den Berechtigungsdaten zugeordnet. Aufgrund der Berechtigungsdaten kann der Zugang zu dem Müllcontainer gewährt oder verweigert werden. Die Zugangslisten können vorteilhafterweise durch den ersten Datentransfer aktualisiert werden. Beispielsweise kann einem Nutzer, der ein bestimmtes Limit an eingeworfenem Müll überschritten hat, die Berechtigung entzogen werden, bis eine entsprechende Nachzahlung erfolgt ist.

Nach einer bevorzugten Ausführungsform beruht der Datentransfer über die Kommunikationskanäle eins bis sechs auf einer Drahtlostechnologie. Vorzugsweise hat diese Drahtlostechnologie eine vergleichsweise kurze Reichweite. Bevorzugt weist die Drahtlostechnologie eine Reichweite unter 300 m, bevorzugt unter 100 m, bevorzugt unter 50 m, bevorzugt unter 30 m, bevorzugt unter 10 m, bevorzugt unter 5 m, bevorzugt unter 3 m, bevorzugt unter 1 m, besonders bevorzugt unter 50 cm auf. Vorteilhafterweise ist die Drahtlostechnologie ausgewählt aus einer Gruppe, die NFC-Technologie (near field communication), RFID-Technologie (radio-frequency identification), WLAN-Technologie (wireless-local area network), Bluetooth^{®}-Technologie und optische Übertragungstechnologie umfasst.

Sowohl die NFC-Technologie als auch die RFID-Technologie verwenden hochfrequente magnetische Wechselfelder zur Datenübertragung. Die RFID-Technologie ist in der Regel eine sogenannte "verbindungslose" Übertragung. Hierbei wird ein passiver Transponder ver-wendet, welcher durch das Wechselfeld eines Lesegeräts mit Energie versorgt wird. Die NFC-Technologie stellt darüber hinaus auch eine sogenannte "verbindungsbehaftete" Über-tragung zur Verfügung. Bei der verbindungsbehafteten Übertragung oder auch Peer-to-Peer-Übertragung wird eine Übertragung zwischen zwei gleichwertigen Transmittern etabliert.

Zwischenzeitlich ist eine Vielzahl kommerziell erhältlicher Smartphones mit einer NFC-Einrichtung ausgestattet. Die NFC-Technologie erreicht eine Datenübertragungsrate von 106 bis 424 kbit/s. Die Datenübertragung basiert auf einer Amplitudenmodulation eines hochfrequenten Magnetfelds mit einer standardisierten Frequenz von 13,56 MHz. An einer Datenübertragung können lediglich zwei Teilnehmer beteiligt sein, ein sogenannter Initiator, welcher als Sender von Informationen fungiert, und ein Empfänger, welcher diese Informationen empfängt.

Die NFC-Technologie stellt auch eine "verbindungslose" Übertragung analog zur RFID-Technik bereit. Eine solche Übertragung wir oft auch als passive Übertragung bezeichnet. Hier erzeugt lediglich der Initiator das hochfrequente Magnetfeld. Der Empfänger kann Daten mittels einer Lastmodulation übertragen. Dabei findet eine Energieaufnahme aus dem Magnetfeld durch einen speziell abgestimmten Schwingkreis des Empfängers statt, woraufhin der Initiator reagiert.

Bei der "verbindungsbehafteten" oder auch aktiven Übertragung erzeugt sowohl der Initiator als auch der Empfänger ein hochfrequentes Magnetfeld. Es wird zunächst ein sogenanntes "Handshake" durchgeführt, indem eine Authentifizierung stattfindet und indem verschiedene Einstellungen, wie beispielsweise die optimale Übertragungsgeschwindigkeit, ausgewählt werden. Anschließend wird der Datenaustausch durchgeführt. Diese als "aktiv-aktiv" oder auch als "Peer-To-Peer" bezeichnete Übertragung stellt eine bevorzugte Ausführungsform dar. Aufgrund der beidseitigen Authentifizierung gilt diese aktive Übertragung als wesentlich sicherer im Vergleich zu der "passiven" Übertragung (bei der zumindest ein Kommunikations-partner nicht aktiv das hochfrequente Magnetfeld sendet).

Nach einer weiteren bevorzugten Ausführungsform erfolgt der Datentransfer zwischen der dritten und der zweiten Kommunikationsschnittstelle über einen siebten Kommunikationskanal. Vorzugsweise erfolgt der Datentransfer zwischen der vierten und der zweiten Kommunikationsschnittstelle über einen achten Kommunikationskanal. Vorteilhafterweise basieren der siebte und der achte Kommunikationskanal zumindest abschnittsweise auf einer Drahtlostechnologie mit einer vergleichsweise langen Reichweite, bevorzugt mit einer maximalen Reichweite von über 30 m, bevorzugt über 100 m, bevorzugt über 500 m, bevorzugt über 1 km, besonders bevorzugt mehrere km. Vorzugsweise basiert der siebte und der achte Kommunikationskanal auf einer Übertragungstechnologie, die ausgewählt ist aus einer Gruppe, die WLAN-Verbindung, Mobilfunkverbindung, 2G (GSM)-Verbindung, 3G (UMTS)-Verbindung, GPRS-Verbindung, 4G (LTE, WiMax)-Verbindung, 5G-Verbindung, umfasst. Selbstverständlich kommen auch noch weitere Verbindungen, wie Funkverbindungen, beispielsweise im ISM-Band, in Betracht.

Die Kommunikationskanäle eins bis sechs gehören somit einer ersten Gruppe, welche vorzugsweise eine Drahtlostechnologie mit einer vergleichsweise kurzen Reichweite nutzen. Die Kommunikationskanäle sieben und acht gehören somit einer zweiten Gruppe an, welche vorzugsweise zumindest abschnittsweise eine Drahtlostechnologie mit einer vergleichsweise langen Reichweite nutzen. Durch die unterschiedliche Ausgestaltung der Gruppen von Kommunikationskanälen wird ermöglicht, dass die jeweiligen Kommunikationskanäle unterschiedliche Reichweiten und/oder Sendeleistungen haben können. Dadurch kann eine asymmetrische Kommunikation ausgebildet werden, bei der bevorzugt die Reichweiten und/oder Sendeleistung der Kommunikationskanäle der ersten Gruppe deutlich geringer ist als diejenigen Kommunikationskanäle der zweiten Gruppe.

Dies hat zur Folge, dass für die Kommunikation zwischen der ersten und der weiteren Kommunikationsschnittstelle über den ersten oder zweiten Kommunikationskanal der Energiebedarf gegenüber einer direkten Kommunikation zwischen der ersten und der zweiten Kommunikationsschnittstelle deutlich verringert ist. Die Kommunikation zwischen der ersten und der zweiten Kommunikationsschnittstelle wird unter Einbindung des Kommunikationsgeräts dennoch gewährleistet, wobei der erhöhte Energiebedarf für die Kommunikation zu und von der zweiten Kommunikationsschnittstelle über den siebten oder achten Kommunikationskanal durch das Kommunikationsgerät und/oder andere Netzwerkteilnehmer (z.B. LAN- oder WLAN-Router, Internetprovider, Netzwerkinfrastruktur eines Mobilfunkanbieters) gedeckt wird.

Nach einer weiteren bevorzugten Ausführungsform weist das weitere Kommunikationsgerät, beispielsweise das erste oder zweite Kommunikationsgerät, eine Datenverarbeitungseinrichtung auf, welche zur Modulation von Daten zur Übertragung auf unterschiedlichen Kommunikationskanälen und/oder für eine Kodierung und/oder für eine Dekodierung der von jeweiligen Kommunikationsschnittstellen empfangenen Daten vor deren Weiterleitung an die jeweils andere Kommunikationsschnittstelle eingerichtet ist. Die durch den ersten Datentransfer übertragenen Daten werden im Grunde unverändert durch das weitere Kommunikationsgerät weitergeleitet. Es kann jedoch eine Modulation der Daten hinsichtlich der auf dem anschließenden Kommunikationskanal verwendeten, unterschiedlichen Übertragungstechnologie not-wendig sein.

Nach einer weiteren bevorzugten Ausführungsform weisen die Kommunikationsschnittstellen eins bis vier eine Kontrolleinrichtung auf, welche ein Prüfverfahren zur Fehlererkennung und - überwachung bei der Datenübertragung durchführt. Ein solches Prüfverfahren kann beispielsweise eine Paritätsprüfung oder Ähnliches sein.

Vorteilhafterweise kann der erste Datentransfer innerhalb bestimmter zeitlicher Abstände initiiert werden. Es wäre jedoch auch denkbar, einen ersten Datentransfer zu initiieren aufgrund eines anderweitigen Auslöseereignisses. Ein solches Auslöseereignis kann auch durch Sensordaten generiert werden, wie beispielsweise das Überschreiten eines gewissen Füllstands. Ebenso kann eine Funktionsstörung eines Bauteils des Müllcontainers ein solches Auslöseereignis sein. Schließlich kann die Notwendigkeit zur Durchführung von Firmware- oder Softwareupdates ein solches Auslöseereignis darstellen. Der erste Datentransfer kann demnach mittels des nächsten zu Verfügung stehenden Kommunikationsgeräts erfolgen. Der erste Datentransfer kann auch in realtime durchgeführt werden.

Ebenso können die Datentransfers zwei bis sieben innerhalb bestimmter zeitlicher Abstände initiiert werden. Diese Datentransfers können auch in realtime durchgeführt werden oder aufgrund eines bestimmten oben genannten Auslöseereignisses erfolgen.

Nach einer bevorzugten Ausführungsform weist der Müllcontainer eine Schleuseneinrichtung mit einer Verriegelungseinrichtung auf. Die Verriegelungseinrichtung ist vorzugsweise ein elektrischer Schließmechanismus. Die Schleuseneinrichtung weist bevorzugt ein begrenztes Aufnahmevolumen auf, so dass bei einem einmaligen Öffnen lediglich eine begrenzte Menge an Müll in den Container eingeworfen werden kann. Optional können in der Schleuse und/oder dem Aufnahmebereich des Müllcontainers eine oder mehrere Einrichtungen zum Ermitteln der zugefügten und/oder vorhandenen Müllmenge vorhanden sein. Beispielsweise könnte es sich dabei um Einrichtungen zur Gewichts- und/oder Volumenermittlung handeln.

Vorteilhafterweise weist der Müllcontainer eine Stromversorgung auf, welche die elektrischen und elektronischen Einrichtungen und Komponenten mit Strom versorgt. Die Stromversorgung ist vorteilhafterweise eine Batterie. Alternativ oder kumulativ könnte auch eine Solarzelle oder Ähnliches vorgesehen sein.

Ein weiterer wesentlicher Aspekt der Erfindung ist ein Verfahren zum Betreiben eines Müllcontainers, welcher eine elektronische Steuereinheit und eine erste Kommunikationsschnittstelle zum Senden und Empfangen von Daten aufweist, wobei das Verfahren folgende Schritte umfasst:
- Registrieren eines Auslöseereignisses über die erste Kommunikationsschnittstelle mittels eines Datentransfers,
- Generieren von zumindest einem Teil von Steuerdaten durch die Steuereinrichtung oder Empfangen zumindest eines Teils von Steuerdaten durch die erste Kommunikationsschnittstelle,
- Übermittlung der Steuerdaten an eine interne oder externe Einrichtung mittels eines Datentransfers,
wobei der Datentransfer zur Registrierung des Auslöseereignisses über einen Kommunikationskanal erfolgt, der auf einer Drahtlostechnologie beruht.

Das Verfahren kann dabei mit allen bereits obig im Rahmen des Systems beschriebenen Merkmalen einzeln oder in Kombination miteinander ausgestattet sein und umgekehrt.

Nach einer bevorzugten Ausführungsform weist die Drahtlostechnologie eine Reichweite unter 300 m, bevorzugt unter 100 m, bevorzugt unter 50 m, bevorzugt unter 30 m, bevorzugt unter 10 m, bevorzugt unter 5 m, bevorzugt unter 3 m, bevorzugt unter 1 m, besonders bevorzugt unter 50 cm auf. Vorteilhafterweise ist die Drahtlostechnologie ausgewählt aus einer Gruppe die NFC-Technologie, RFID-Technologie, WLAN-Technologie, Bluetooth^{®}-Technologie und optische Übertragungstechnologie umfasst.

Nach einer bevorzugten Ausführungsform des Verfahrens umfasst der Müllcontainer zumindest eine Sensoreinrichtung, welche eine interne Einrichtung darstellt. Vorzugsweise ist der Datentransfer ein sechster Datentransfer, welcher zwischen der zumindest einen Sensoreinrichtung und der ersten Kommunikationsschnittstelle über einen fünften Kommunikationskanal erfolgen kann. Vorzugsweise kann der sechste Datentransfer unidirektional oder bidirektional sein. Ein bidirektionaler Datentransfer erlaubt beispielsweise das Übertragen von Software- oder Firmwareupdates auf die zumindest eine Sensoreinrichtung.

Die zumindest eine Sensoreinrichtung könnte vorteilhafterweise einen Sensor zur Überwachung der Temperatur im Innenraum des Müllcontainers aufweisen. Durch eine solche Überwachung kann das Entstehen eines Brandes in dem Container schnell detektiert und gemeldet werden.

Ferner könnte die Sensoreinrichtung einen Füllstandssensor aufweisen, wodurch rechtzeitige Leerungen gewährleistet werden. Der Füllstandssensor kann eine sonographische oder eine optische Füllhöhenermittlung durchführen.

Erfindungsgemäß ist der Datentransfer ein siebter Datentransfer. Erfindungsgemäß werden mittels des siebten Datentransfers Steuerdaten an die zumindest eine interne Einrichtung in Form einer Verriegelungseinheit des Müllcontainers übermittelt. Erfindungsgemäß erfolgt der siebte Datentransfer über einen sechsten Kommunikationskanal und kann unidirektional oder bidirektional sein.

Erfindungsgemäß werden die Steuerdaten aufgrund eines Auslöseereignisses erzeugt. Bevorzugt werden die Steuerdaten zumindest teilweise durch die Steuereinrichtung und/oder zumindest teilweise durch eine Sensoreinrichtung erzeugt. Ein solches Auslöseereignis kann von vielfältiger Gestalt sein. Es kann beispielsweise auf bestimmten Sensordaten beruhen. Demnach würde durch die Detektion eines bestimmten Umstands, wie Temperatur, Hitze, Füllstand, durch einen Sensor bestimmte Sensordaten erzeugt, welche dann vorteilhafterweise ganz oder teilweise durch die Steuereinrichtung ausgewertet, werden. Aufgrund der Auswertung können dann entsprechende Steuerdaten erzeugt werden, die an die bestimmte Einrichtung übermittelt werden.

Es wäre jedoch auch denkbar, dass die Sensoreinrichtung bereits eine Auswerteeinrichtung aufweist, welche die Sensordaten zumindest teilweise auswertet und zumindest teilweise die Steuerdaten erzeugt. Diese Steuerdaten werden dann über die erste Kommunikationsschnittstelle und gegebenenfalls über die Steuereinrichtung und erste Kommunikationseinrichtung an die bestimmte Einrichtung übermittelt.

Die Auswertung der Steuerdaten kann bevorzugt jedoch auch durch einen vom Müllcontainer beanstandeten Server erfolgen, welcher zunächst die Sensordaten durch die erste Kommunikationsschnittstelle erhalten hat. Die Steuerdaten werden dann über die erste Kommunikationsschnittstelle mittels des siebten Datentransfers an die zumindest eine interne oder die zumindest eine externe Einrichtung übermittelt.

Beispielsweise könnte ein Füllstandssensor einen bestimmten Füllstand messen, welcher keinen weiteren Einwurf mehr erlauben würden. Die dem Füllstand entsprechenden Sensor-daten würden dann ausgewertet, durch entweder die Sensoreinrichtung, die Steuereinrichtung den Server oder eine anderweitige Auswerteeinrichtung. Die entsprechend generierten Steuerdaten werden dann an die interne Einrichtung in Form einer Verriegelungseinrichtung übermittelt, so dass diese den Müllcontainer verriegelt, wodurch ein weiterer Einwurf verhindert wird. Gleichzeitig könnte eine weitere interne oder externe Einrichtung in Form einer Anzeige- oder Ausgabeeinrichtung aktiviert werden, welche anzeigt, dass der Müllcontainer gerade nicht nutzbar ist.

Analog könnte ein Brand in oder nahe des Müllcontainers mittels eines Geruchs- oder Temperatursensors festgestellt werden. Die entsprechend generierten Steuerdaten würden dann an einen internen oder externen Feuerlöscher übermittelt, welcher dadurch aktiviert werden würde.

Das Auslöseereignis kann vorteilhafterweise jedoch auch ein Datentransfer, ein bloßes Erkennen eines bestimmten Kommunikationsgeräts, ein Ablaufen eines vorbestimmten Zeitintervalls oder ähnliches sein.

Nach einer weiteren bevorzugten Ausführungsform des Vefahrens umfasst das weitere Kommunikationsgerät ein erstes Kommunikationsgerät, welches die weitere Kommunikationsschnittelle in Form einer dritten Kommunikationsschnittstelle umfasst. Vorzugsweise ist ein Entleer- oder Servicefahrzeug mit dem ersten Kommunikationsgerät ausgestattet. Vorteilhafterweise stellt da-bei ein Datentransfer mittels einer Drahtlostechnologie zwischen der ersten Kommunikationsschnittstelle und der dritten Kommunikationsschnittstelle ein Auslöseereignis dar. Erfindungsgemäß erzeugt die Steuereinrichtung aufgrund des Auslöseereignisses Steuerdaten, welche der internen Einrichtung in Form einer Verriegelungseinrichtung übermittelt werden, woraufhin die Verriegelungseinrichtung entriegelt. Demnach kann das System vorteilhafterweise eine automatische Entriegelung des Müllcontainers bei einem Entleerungsvorgang bereitstellen. Bisher wird ein solches Entriegeln aufgrund einer Detektion eines Anhebevogangs angewiesen. Vorliegend kann das Entleer- oder Servicefahrzeug beziehungsweise das erste Kommunikationsgerät durch einen Datentransfer oder erkannt werden. Demnach ist es vorteilhaft, wenn nach dem Etablieren einer Kommunikationsverbindung zwischen der ersten Kommunikationsschnittstelle und der zweiten Kommunikationsschnittstelle eine Autorisierung stattfindet. Hierbei erkennt die Steuereinrichtung das Vorhandensein eines Entleerungsfahrzeugs und gibt entsprechende Steuerdaten über die erste Kommunikationsschnittstelle an die entsprechende Verriegelungseinrichtung weiter. Eine solche Erkennung kann beispielsweise durch ein "Handschake" bei einer NFC-Verbindung oder einem sogenannten "Pairing" bei einer Bluetooth^{®}-Verbindung erfolgen.

Nach dem Entleerungsvorgang kann das Entfernen des Entleerungsfahrzeugs detektiert werden, woraufhin die Steuereinrichtung entsprechende Steuerdaten über die erste Kommunikationsschnittstelle an die entsprechende Verriegelungseinrichtung zur Verriegelung ausgibt.

Nach einer weiteren bevorzugten Ausführungsform umfasst das Verfahren eine Datenübertragung zwischen dem Müllcontainer und einem von dem Müllcontainer beabstandeten Server, welcher eine zweite Kommunikationsschnittstelle aufweist, wobei das Verfahren folgende Schritte umfasst:
- Etablieren einer Datenverbindung mittels eines Kommunikationskanals zwischen der ersten Kommunikationsschnittstelle und einer weiteren Kommunikationsschnittstelle eines weiteren Kommunikationsgeräts, welches kein Bestandteil des Müllcontainers ist;
- Autorisieren der Datenverbindung;
- Initiieren eines indirekten ersten Datentransfers zwischen der ersten Kommunikationsschnittstelle und der zweiten Kommunikationsschnittstelle und/oder zwischen der zweiten Kommunikationsschnittstelle und der ersten Kommunikationsschnittstelle über zumindest eine weitere Kommunikationsschnittstelle.

Dieses Verfahren erlaubt die Kommunikation zwischen Müllcontainer und Server, ohne dass seitens des Müllcontainers eine energie- und kostenintensive Kommunikationsschnittstelle vorhanden sein muss, die die direkte Kommunikation mit dem entfernt angeordneten Server ermöglicht. Vielmehr kann eine zwischen dem einen, eine weitere Kommunikationsschnittstelle aufweisenden Kommunikationsgerät und dem Server bestehende Datenverbindung zur indirekten Kommunikation, zwischen Müllcontainer und Server, (mit-) genutzt werden. Ein Etablieren einer Datenverbindung umfasst den Aufbau einer Datenverbindung. Der Initiator kann dabei die erste oder die weitere Kommunikationsschnittstelle sein. Weiterhin kann es vorteilhaft sein, wenn die übertragenen Daten aufgrund ihrer Richtigkeit kontrolliert werden.

Erfindungsgemäß weist der Müllcontainer eine Speichereinrichtung auf, auf welcher nach einer Nutzung des Müllcontainers Benutzungsdaten abgelegt werden. Erfindunggemäß werden die gespeicherten Benutzungsdaten über den ersten Datentransfer übertragen.

Nach einer besonders bevorzugten Ausführungsform des Verfahrens umfasst ein erstes Kommunikationsgerät eine dritte Kommunikationsschnittstelle. Vorzugweise erfolgt der unidirektionale oder bidirektionale erste Datentransfer zwischen der ersten Kommunikationsschnittstelle und der zweiten Kommunikationsschnittstelle über die dritte Kommunikationsschnittstelle. Erfindungsgemäß ist ein Entleer- oder Servicefahrzeug mit dem ersten Kommunikationsgerät ausgestattet, wobei das erste Kommunikationsgerät ein Teil einer Recheneinheit, eines sogenannten On Board Computers (OBC) des Entleer- oder Servicefahrzeugs ist. Da derartige Entleer- oder Servicefahrzeuge zwangsläufig in regelmäßigen Abständen in unmittelbare Nähe des Müllcontainers kommen, ist ein erster Datentransfer über ein Kommunikationsgerät, welches sich in einem solchen Fahrzeug befindet, besonders vor-teilhaft. Darüber hinaus kann ein solches Fahrzeug dem ersten Kommunikationsgerät ohne Probleme eine ausreichende Energieversorgung zur Verfügung stellen. Bevorzugt erfolgt der Datentransfer zwischen der ersten und der dritten Kommunikationsschnittstelle über einen ersten Kommunikationskanal.

Nach einer weiteren bevorzugten Ausführungsform des Verfahrens umfasst ein zweites Kommunikationsgerät eine vierte Kommunikationsschnittstelle. Vorzugweise kann der unidirektionale oder bidirektionale erste Datentransfer zwischen der ersten Kommunikationsschnittstelle und der zweiten Kommunikationsschnittstelle über die vierte Kommunikationsschnittelle erfolgen. Vorteilhafterweise ist das zweite Kommunikationsgerät einem Benutzer zugeordnet. Vorzugsweise ist das zweite Kommunikationsgerät ein portables Datenverarbeitungsgerät, bevorzugt mit einer Anzeigeeinrichtung, beispielsweise ein Mobiltelefon, ein Smartphone, ein Tablet oder ein Laptop. Eine derartige Ausgestaltung hat den Vorteil, dass ein Benutzer des Müllcontainers ein solches zweites Kommunikationsgerät, wie beispielsweise ein Smartphone, bereits für den Identifikationsvorgang bei der Online-Nutzung verwenden kann. Insbesondere ein Smartphone ist als Kommunikationsgerät bevorzugt, da es weit verbreitet ist und eine Vielzahl von Kommunikationsschnittstellen aufweist, die zur Ausbildung einer Datenverbindung zum Müllcontainer einerseits und/oder Server andererseits genutzt werden können. Außerdem weist ein Smartphone eine Anzeigeeinrichtung auf, über welche Informationen an den Benutzer gesendet werden könnten. Bevorzugt erfolgt der Transfer von Daten zwischen der ersten und der vierten Kommunikationsschnittstelle über einen zweiten Kommunikationskanal.

Nach einer weiteren bevorzugten Ausführungsform des Verfahrens kann der unidirektionale oder bidirektionale erste Datentransfer zwischen der ersten Kommunikationsschnittstelle und der zweiten Kommunikationsschnittstelle sowohl über das erste Kommunikationsgerät, beziehungsweise die dritte Kommunikationsschnittstelle, als auch über das zweite Kommunikationsgerät, beziehungsweise die vierte Kommunikationsschnittstelle, erfolgen.

Nach einer weiteren bevorzugten Ausführungsform des Verfahrens erfolgt der Datentransfer zwischen der dritten und der zweiten Kommunikationsschnittstelle über einen siebten Kommunikationskanal, wobei der Datentransfer zwischen der vierten und der zweiten Kommunikationsschnittstelle über einen achten Kommunikationskanal erfolgt, wobei der siebte und der achte Kommunikationskanal zumindest abschnittsweise auf einer Drahtlostechnologie mit maximal einer Reichweite von über 30 m, bevorzugt über 100 m, bevorzugt über 500 m, bevorzugt über 1 km, besonders bevorzugt mehrere km basieren und eine Übertragungstechnologie, die ausgewählt ist aus einer Gruppe, die WLAN-Verbindung, Mobilfunkverbindung, 2G (GSM)-Verbindung, 3G (UMTS)-Verbindung, GPRS-Verbindung, 4G (LTE, WiMax)-Verbindung, 5G-Verbindung umfasst.

Ein Autorisieren einer Datenverbindung kann das Erkennen des weiteren Kommunikationsgeräts durch die erste Kommunikationsschnittstelle beziehungsweise durch die Steuereirichtung des Müllcontainers umfassen. Ein solcher Vorgang umfasst ein Zuordnen übermittelter Identifikationsdaten zu gespeicherten Daten. Durch eine solche Autorisierung kann beispiels-weise erkannt werden, ob das weitere Kommunikationsgerät einem Entleer- oder Service-fahrzeug zugehörig ist. Im Falle eines anwesenden Entleerungsfahrzeugs kann beispielsweise durch die Steuereinrichtung bevorzugt eine Verriegelungseinrichtung geöffnet werden, wodurch eine Entleerung des Müllcontainers erfolgen kann.

Ein solches Autorisieren kann jedoch auch nur eine systembedingte Autorisierung sein, beispielsweise ein "Handshake" bei einer NFC-Verbindung, in dem verschiedene Einstellungen, wie beispielsweise die optimale Übertragungsgeschwindigkeit, ausgewählt werden. Ein sogenanntes "Pairing" bei einer Bluetooth-Verbindung kann auch eine derartige Autorisierung sein.

Nach einer bevorzugten Ausführungsform kann das Verfahren eine Steuerung eines Zugangs zu einem Müllcontainer für einen Benutzer umfassen, wobei die folgenden weiteren Schritte umfasst werden:
a) Initiieren eines Transfers von Identifikationsdaten von der ersten Kommunikationsschnittstelle zu einem einem Benutzer zuordenbaren und eine vierte Kommunikationsschnittstelle aufweisenden zweiten Kommunikationsgerät vor Nutzung des Müllcontainers;
b) Übermitteln der Identifikationsdaten für den Müllcontainer und des Benutzers von dem die vierte Kommunikationsschnittstelle aufweisenden zweiten Kommunikationsgerät zu einem eine zweite Kommunikationsschnittstelle aufweisenden Server;
c) Empfangen der Identifikationsdaten durch die zweite Kommunikationsschnittstelle und Zuführen der Identifikationsdaten zu einem Authentifizierungsmanager des Servers;
d) Zuordnung von Benutzerdaten aus einer Datenbank des Servers zu den Identifikationsdaten durch den Authentifizierungsmanager;
e) Generieren von Berechtigungsdaten zum Gewähren oder Verweigern des Zugangs zu diesem Müllcontainer für diesen Benutzer;
f) Übertragung der Berechtigungsdaten von der zweiten Kommunikationsschnittstelle an die vierte Kommunikationsschnittstelle und/oder das zweite Kommunikationsgerät und optional Umwandlung des Signals in dem zweiten Kommunikationsgerät;
g) Übertragung der Berechtigungsdaten von der vierten Kommunikationsschnittstelle und/oder dem zweiten Kommunikationsgerät an die erste Kommunikationsschnittstelle;
h) Gewähren oder Verweigern des Zugangs zu diesem Müllcontainer für den Benutzer in Abhängigkeit des von den an der ersten Kommunikationsschnittstelle empfangenen Berechtigungsdaten.

In einer weiteren bevorzugten Verfahrensvariante werden für die Schritte a) und b) verschiedene Kommunikationskanäle genutzt. Dies erlaubt, dass die Reichweite der Kommunikationskanäle und der Energiebedarf der dafür genutzten Kommunikationsschnittstelle auf die jeweiligen Bedürfnisse angepasst werden kann. Somit wird eine besonders energiesparende und günstige (indirekte) Kommunikation zwischen der ersten und der zweiten Kommunikationsschnittstelle ermöglicht.

In einer weiteren bevorzugten Variante des Verfahrens ist vorgesehen, dass für den Schritt a) eine einen geringen Energieverbrauch aufweisende Drahtlostechnologie mit einer Reichweite unter 300 m genutzt wird. Diese Verfahrensvariante ist besonders bevorzugt, da Schritt a) als besonders kritisch hinsichtlich des Energiebedarfs des Müllcontainers und der Kosten der Datenübertragung identifiziert wurde. Drahtlostechnologien mit geringer Reichweite erlauben üblicherweise geringen Energiebedarf bei dennoch vergleichsweise hoher Datenrate. Darüber hinaus sind derartige Drahtlostechnologien üblicherweise entgeltfrei nutzbar, so dass zumindest für diesen Abschnitt der Kommunikation zwischen erster und zweiter Kommunikationsschnittstelle keine Kosten anfallen. Insbesondere bevorzugt ist dafür eine Übertragungstechnologie, die ausgewählt ist aus einer Gruppe, die NFC-Technologie, RFID-Technologie und optische Übertragungstechnologie umfasst. Die sich hieraus ergebenden Vorteile wurden bereits oben vorrichtungsseitig beschrieben.

Bevorzugt ist weiterhin eine Verfahrensvariante, bei der für Schritt b) zumindest abschnittsweise eine Drahtlostechnologie mit einer maximalen Reichweite von über 30 m genutzt wird. Als maximale Reichweite soll in diesem Zusammenhang die Reichweite der Kommunikation zwischen zwei Kommunikationsschnittstellen unter üblichen Bedingungen ohne zwischen den Kommunikationsschnittstellen angeordneten Hindernissen verstanden werden. Eine solche Reichweite erlaubt üblicherweise die (drahtlose) Übertragung von Daten von dem Kommunikationsgerät zumindest bis zum nächstgelegenen Übergabepunkt, über welchen die Daten (evtl. über ein lokales Netzwerk (LAN)) in ein Weitverkehrsnetz (WAN) eingespeist werden und darüber an die zweite Kommunikationsschnittstelle weitergeleitet werden können. Der Übergabepunkt oder Zugangspunkt kann beispielsweise ein WLAN-Router oder ein Sendemast eines Mobilfunkanbieters sein. Eine große Reichweite der für Schritt b) zumindest abschnittsweise genutzten Drahtlostechnologie ermöglicht somit einen großen Bewegungsradius des Benutzers unter Beibehaltung der Drahtlosverbindung und daraus folgend auch eine große Variabilität in der Auswahl eines Standortes für den Müllcontainer. Für eine nochmals vergrößerte Variabilität des Standorts und die weitgehende Unabhängigkeit von bestehender Infrastruktur ist die Reichweite der für Schritt b) zumindest abschnittsweise genutzten Drahtlostechnologie bevorzugt über 100 m, bevorzugt über 500 m, bevorzugt über 1 km, besonders bevorzugt mehrere km. Als besonders geeignet hat sich die Nutzung einer Übertragungstechnologie herausgestellt, die ausgewählt ist aus einer Gruppe, die WLAN-Verbindung, Mobilfunkverbindung, GSM-Verbindung, UMTS-Verbindung, GPRS-Verbindung, LTE-Verbindung und DECT umfasst.

Verfahrensseitig ist bevorzugt, dass die in Schritt g) von der vierten Kommunikationsschnittstelle und/oder dem zweiten Kommunikationsgerät an die erste Kommunikationsschnittstelle übertragenen Berechtigungsdaten einen einmaligen oder rollenden Code umfassen. Dies ist bevorzugt, um zu verhindern, dass Unbefugte die Authentifizierungsdaten mitlesen und diese Daten für einen unbefugten Zugang zum Müllcontainer nutzen. Durch die Verwendung eines einmaligen oder rollenden Codes sind die aktuellen Zugangsgewährungsdaten für den nächsten Zugangsversuch unbrauchbar und unbefugter Zugang mit diesen Daten zu einem späteren Zeitpunkt nicht mehr möglich.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig.1: eine Prinzipskizze des Systems zur Bereitstellung von Nachrichten für einen Benutzer eines Müllcontainers nach einer Ausführungsform;
- Fig.2: eine Prinzipskizze des Systems zur Bereitstellung von Nachrichten für einen Benutzer eines Müllcontainers nach einer weiteren Ausführungsform;
- Fig.3: eine Prinzipskizze des Systems zur Bereitstellung von Nachrichten für einen Benutzer eines Müllcontainers nach einer weiteren Ausführungsform.

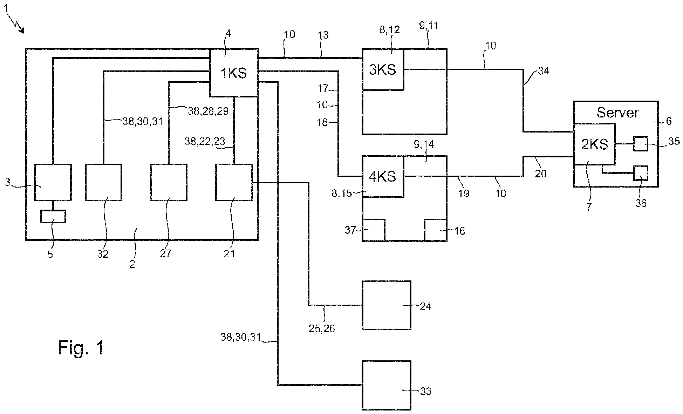

In den Figuren 1 bis 3 wird ein System (1) zum Betreiben eines Müllcontainers (2) umfassend einen Müllcontainer (2), welcher eine elektronische Steuereinrichtung (3) und eine erste Kommunikationsschnittstelle (4) zum Senden und Empfangen von Daten aufweist, gezeigt, wobei über die erste Kommunikationsschnittstelle (4) ein erster Datentransfer (10) zu zumindest einer weiteren Kommunikationsschnittstelle (8, 12, 15) initiierbar ist, welche in zumindest einem weiteren Kommunikationsgerät (9, 11, 14) vorgesehen ist, das nicht dem Müllcontainer (2) zugehörig ist, wobei über die erste Kommunikationsschnittstelle (4) ein weiterer Datentransfer (38) zwischen zumindest einer internen Einrichtung (27, 32, 33) initiierbar ist, wobei der erste (10) und der weitere Datentransfer (38) auf einer Drahtlostechnologie beruhen.

Ferner wird in den Figuren 1 bis 3 ein Verfahren dargestellt zum Betreiben eines Müllcontainers (2), welcher eine elektronische Steuereinheit (3) und eine erste Kommunikationsschnittstelle (4) zum Senden und Empfangen von Daten aufweist, wobei das Verfahren folgende Schritte umfasst:
- Registrieren eines Auslöseereignisses über die erste Kommunikationsschnittstelle (4) mittels eines Datentransfers,
- Generieren von zumindest einem Teil von Steuerdaten durch die Steuereinrichtung (3) oder Empfangen zumindest eines Teils von Steuerdaten durch die erste Kommunikationsschnittstelle (4),
- Übermittlung der Steuerdaten an eine interne oder externe Einrichtung mittels eines Datentransfers,
wobei der Datentransfer zur Registrierung des Auslöseereignisses über einen Kommunikationskanal erfolgt, der auf einer Drahtlostechnologie beruht.

Der Müllcontainer (2) kann zumindest eine Sensoreinrichtung (27) umfassen, wobei der weitere Datentransfer ein sechster Datentransfer (28) ist, welcher zwischen der zumindest einen Sensoreinrichtung (27) und der ersten Kommunikationsschnittstelle (4) über einen fünften Kommunikationskanal (29) erfolgen kann. Der sechste Datentransfer (28) kann unidirektional oder bidirektional sein.

Der weitere Datentransfer ist auch ein siebter Datentransfer (28) sein, wobei mittels des siebten Datentransfers (30) Steuerdaten an die zumindest eine interne Einrichtung (32) des Müllcontainers (2) oder an zumindest eine externe Einrichtung (33) übermittelt werden. Der siebte Datentransfer (30) erfolgt über einen sechsten Kommunikationskanal (31) und ist unidirektional oder bidirektional. Die zumindest eine interne Einrichtung (32) ist eine Verriegelungseinrichtung.

Die Steuerdaten werden aufgrund eines Auslöseereignisses erzeugt, wobei die Steuerdaten zumindest teilweise durch die Steuereinrichtung (3) und/oder zumindest teilweise durch eine Sensoreinrichtung (27) erzeugt werden.

Das weitere Kommunikationsgerät (9, 11, 14) ist ein erstes Kommunikationsgerät (9, 11), welches die weitere Kommunikationsschnittstelle in Form einer dritten Kommunikationsschnittstelle (8, 12) umfasst. Dabei ist ein Entleer- oder Servicefahrzeug mit dem ersten Kommunikationsgerät (9, 11) ausgestattet. Ein Datentransfer zwischen der ersten Kommunikationsschnittstelle (4) und der dritten Kommunikationsschnittstelle (8, 12) stellt somit ein Auslöseereignis dar, woraufhin die Steuereinrichtung (3) aufgrund des Auslöseereignisses Steuerdaten erzeugt, welche der internen Einrichtung (32) in Form einer Verriegelungseinrichtung übermittelt werden, woraufhin die Verriegelungseinrichtung entriegelt. Somit kann eine einfache effektive Entleerung des Müllcontainers gewährleistet werden.

Das System (1) kann einen von dem Müllcontainer beabstandeten Server (6) aufweisen, welcher eine zweite Kommunikationsschnittstelle (7) umfasst. Die erste Kommunikationsschnittstelle (4) weist keine Einrichtung zur direkten Datenübertragung an die zweite Kommunikationsschnittstelle (7) auf und zwischen der ersten Kommunikationsschnittstelle (4) und der zweiten Kommunikationsschnittstelle (7) und/oder zwischen der zweiten Kommunikationsschnittstelle (7) und der ersten Kommunikationsschnittstelle (4) über die zumindest eine weitere Kommunikationsschnittstelle (8, 12, 15) ist ein indirekter erster Datentransfer initiierbar. Erfindungsgemäß werden durch die Steuereinrichtung (3) nach einer Nutzung des Müllcontainers (2) Benutzungsdaten in einer dem Müllcontainer zugehörigen Speichereinrichtung (5) abgelegt werden. Diese gespeicherten Benutzungsdaten werden dann wiederum über den ersten Datentransfer (10) an den Server (6) übertragen.

Demnach kann das Verfahren zum Betreiben eines Müllcontainers vorzugsweise weiterhin ein Verfahren zur Datenübertragung umfassen zwischen einem Müllcontainer (2), welcher eine elektronische Steuereinrichtung (3), eine erste Kommunikationsschnittstelle (4) zum Senden und Empfangen von Daten und eine Speichereinrichtung (5) aufweist und einen von dem Müllcontainer (2) beabstandeten Server (6), welcher eine zweite Kommunikationsschnittstelle (7) aufweist, wobei das Verfahren folgende Schritte umfasst:
- Etablieren einer Datenverbindung mittels eines Kommunikationskanals (13, 17) zwischen der ersten Kommunikationsschnittstelle (4) und einer weiteren Kommunikationsschnittstelle (8, 12, 15) eines weiteren Kommunikationsgeräts (9, 11, 14), welches kein Bestandteil des Müllcontainers (2) ist;
- Autorisieren der Datenverbindung;
- Initiieren eines indirekten ersten Datentransfers (10) zwischen der ersten Kommunikationsschnittstelle (4) und der zweiten Kommunikationsschnittstelle (7) und/oder zwischen der zweiten Kommunikationsschnittstelle (7) und der ersten Kommunikationsschnittstelle (4) über zumindest eine weitere Kommunikationsschnittstelle (8, 12, 15).

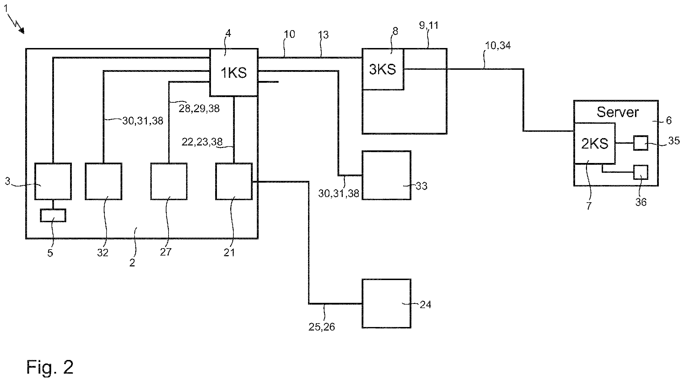

In der Ausführungsform nach Figur 2 umfasst das System (1) ein erstes Kommunikationsgerät (9, 11) eine dritte Kommunikationsschnittstelle (8, 12), wobei der unidirektionale oder bidirektionale erste Datentransfer (10) zwischen der ersten Kommunikationsschnittstelle (4) und der zweiten Kommunikationsschnittstelle (7) über die dritte Kommunikationsschnittstelle (8, 12) erfolgen kann. Das erste Kommunikationsgerät (9, 11) ist dabei in einem Entleer- oder Servicefahrzeug vorgesehen. Der Datentransfer erfolgt hierbei zwischen der ersten (4) und der dritten Kommunikationsschnittstelle (8, 12) über einen ersten Kommunikationskanal (13).

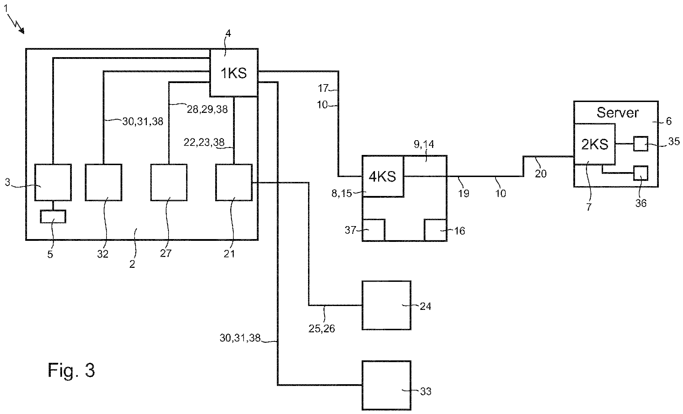

In der Ausführungsform nach Figur 3 umfasst das System (1) ein zweites Kommunikationsgerät (9, 14) eine vierte Kommunikationsschnittstelle (8, 15), wobei der unidirektionale oder bidirektionale erste Datentransfer zwischen der ersten Kommunikationsschnittstelle (4) und der zweiten Kommunikationsschnittstelle (7) über die vierte Kommunikationsschnittstelle (8, 15) erfolgen kann. Das zweite Kommunikationsgerät (9, 14) ist einem Benutzer zugeordnet, wobei das zweite Kommunikationsgerät (9, 14) ein portables Datenverarbeitungsgerät, bevorzugt mit einer Anzeigeeinrichtung (16), beispielsweise ein Mobiltelefon, ein Smartphone, ein Tablet oder ein Laptop ist. Der Transfer von Daten zwischen der ersten (4) und der vierten Kommunikationsschnittstelle (8, 15) erfolgt über einen zweiten Kommunikationskanal (17).

In der Ausführungsform nach Figur 1 kann der erste Datentransfer (10) sowohl über die dritte Kommunikationsschnittstelle (8, 12) des ersten Kommunikationsgeräts (9, 11) als auch über eine vierte Kommunikationsschnittstelle (8, 15) eines zweiten Kommunikationsgeräts (9, 14) erfolgen.

Zur Identifizierung eines Benutzers vor der Nutzung des Müllcontainers (2) ist zwischen der ersten Kommunikationsschnittstelle (4) und der vierten Kommunikationsschnittstelle (8, 15) ein zweiter Datentransfer (18) initiierbar. Ferner ist ein anschließender dritter Datentransfer (19) zwischen der vierten Kommunikationsschnittstelle (8, 15) und der zweiten Kommunikationsschnittstelle (7) des Servers (6) initiierbar. Der zweite Datentransfer (18) von Identifikationsdaten erfolgt zwischen der ersten (4) und der vierten Kommunikationsschnittstelle (8, 15) über den zweiten Kommunikationskanal (17). Der dritte Datentransfer (19) erfolgt zwischen der vierten Kommunikationsschnittstelle (8, 15) und der zweiten Kommunikationsschnittstelle (7) über einen achten Kommunikationskanal (20).

Nach einer Ausführungsform kann das genannte Verfahren eine Steuerung eines Zugangs zu dem Müllcontainer (2) für einen Benutzer umfassen, wobei die folgenden weiteren Schritte umfasst werden:
a) Initiieren eines Transfers von Identifikationsdaten von der ersten Kommunikationsschnittstelle (4) zu einem einem Benutzer zuordenbaren und eine vierte Kommunikationsschnittstelle (8, 15) aufweisenden zweiten Kommunikationsgerät (9, 14) vor Nutzung des Müllcontainers (2);
b) Übermitteln der Identifikationsdaten für den Müllcontainer (2) und des Benutzers von dem die vierte Kommunikationsschnittstelle (8, 15) aufweisenden zweiten Kommunikationsgerät (9, 14) zu einem eine zweite Kommunikationsschnittstelle (7) aufweisen-den Server (6);
c) Empfangen der Identifikationsdaten durch die zweite Kommunikationsschnittstelle (7) und Zuführen der Identifikationsdaten zu einem Authentifizierungsmanager (35) des Servers (6),
d) Zuordnung von Benutzerdaten aus einer Datenbank (36) des Servers (6) zu den Identifikationsdaten durch den Authentifizierungsmanager (35);
e) Generieren von Berechtigungsdaten zum Gewähren oder Verweigern des Zugangs zu diesem Müllcontainer (2) für diesen Benutzer;
f) Übertragung der Berechtigungsdaten von der zweiten Kommunikationsschnittstelle (7) an die vierte Kommunikationsschnittstelle (8, 15) und/oder das zweite Kommunikationsgerät (9, 14) und optional Umwandlung des Signals in dem zweiten Kommunikationsgerät (9, 14);
g) Übertragung der Berechtigungsdaten von der vierten Kommunikationsschnittstelle (8, 15) und/oder dem zweiten Kommunikationsgerät (9, 14) an die erste Kommunikationsschnittstelle (4);
h) Gewähren oder Verweigern des Zugangs zu diesem Müllcontainer (2) für den Benutzer in Abhängigkeit von den an der ersten Kommunikationsschnittstelle (4) empfangenen Berechtigungsdaten.

Der Müllcontainer (2) kann optional eine Empfangseinrichtung (21) umfassen. Zwischen der Empfangseinrichtung (21) und der ersten Kommunikationsschnittstelle (4) kann ein vierter Datentransfer (22) über einen dritten Kommunikationskanal (23) erfolgen, wobei der vierte Datentransfer (22) unidirektional oder bidirektional sein kann. Zur Identifizierung eines Benutzers ist vor der Nutzung des Müllcontainers (2) zwischen der Empfangseinrichtung (21) und einer Identifikationseinrichtung (24) mittels eines vierten Kommunikationskanals (25) ein fünfter Datentransfer (26) von Identifikationsdaten initiierbar. Ein solcher Identifikationsvorgang ist eine sogenannte Offline-Nutzung des Müllcontainers (2).

Der Müllcontainer (2) kann zumindest eine Sensoreinrichtung (27) umfassen. Zwischen der zumindest einen Sensoreinrichtung (27) und der ersten Kommunikationsschnittstelle (4) kann ein sechster Datentransfer (28) über einen fünften Kommunikationskanal (29) erfolgen, wobei der sechste Datentransfer (28) unidirektional oder bidirektional sein kann.

Nach einer Ausführungsform sind von der ersten Kommunikationsschnittstelle (4) mittels eines siebten Datentransfers (30) Steuerdaten an zumindest eine interne Einrichtung (32) des Müllcontainers (2) oder an zumindest eine externe Einrichtung (33) übermittelbar. Der siebte Datentransfer (30) erfolgt über einen sechsten Kommunikationskanal (31) und kann unidirektional oder bidirektional sein. Die Steuerdaten werden zumindest teilweise durch die Steuer-einrichtung (3) oder zumindest teilweise durch eine Sensoreinrichtung (27) erzeugt. Die zumindest eine interne Einrichtung (32) oder die zumindest eine externe Einrichtung (33) können ein Aktuator, eine Verriegelungseinrichtung, eine Anzeigeeinrichtung, eine Ausgabeeinrichtung oder ein Feuerlöscher sein.

Nach einer weiteren Ausführungsform beruht der Datentransfer über die Kommunikationskanäle eins bis sechs (13, 17, 23, 25, 29,) auf einer Drahtlostechnologie, wobei die Drahtlostechnologie eine Reichweite unter 300 m, bevorzugt unter 100 m, bevorzugt unter 50 m, bevorzugt unter 30 m, bevorzugt unter 10 m, bevorzugt unter 5 m, bevorzugt unter 3 m, bevorzugt unter 1 m, besonders bevorzugt unter 50 cm aufweist, wobei die Drahtlostechnologie ausgewählt ist aus einer Gruppe, die NFC-Technologie, RFID-Technologie, WLAN-Technologie, Bluetooth^{®}-Technologie und optische Übertragungstechnologie umfasst.

Nach einer weiteren Ausführungsform erfolgt der Datentransfer zwischen der dritten (8, 12) und der zweiten Kommunikationsschnittstelle (7) über einen siebten Kommunikationskanal (34). Der Datentransfer erfolgt zwischen der vierten (9, 14) und der zweiten Kommunikationsschnittstelle (7) über einen achten Kommunikationskanal (20). Der siebte (34) und der achte Kommunikationskanal (20) beruhen zumindest abschnittsweise auf einer Drahtlostechnologie mit maximal einer Reichweite von über 30 m, bevorzugt über 100 m, bevorzugt über 500 m, bevorzugt über 1 km, besonders bevorzugt mehrere km und einer Übertragungstechnologie, die ausgewählt ist aus einer Gruppe, die WLAN-Verbindung, Funkverbindung, Mobilfunk-verbindung, 2G-Verbindung, 3G-Verbindung, GPRS-Verbindung, 4G-Verbindung, 5G-Verbindung umfasst.

Nach einer weiteren Ausführungsform weist das weitere Kommunikationsgerät (9, 11, 14) eine Datenverarbeitungseinrichtung auf, welche zur Modulation von Daten zur Übertragung auf unterschiedlichen Kommunikationskanälen (13, 17, 34, 20) und/oder für eine Kodierung und/oder für eine Dekodierung der von den jeweiligen Kommunikationsschnittstellen (4, 7, 8, 12, 15) empfangenen Daten vor deren Weiterleitung an die jeweils andere Kommunikationsschnittstelle (4, 7, 8, 12, 15) eingerichtet ist.

Im Folgenden wird eine Übersicht präsentiert, welche die verschiedenen Kommunikationskanäle, die Datentransfers und die beteiligten Kommunikationsschnittstellen (KS)/Einrichtungen auflistet. Ferner wird die jeweils bevorzugte Übertragungstechnik/Drahtlostechnologie angegeben.

| Kommunikationskanal | Datentransfer | Beteiligte Kommunikationsschnittstellen (KS)/Einrichtungen | Reichweite der Drahtlostechnologie |
|---|---|---|---|
| erster (13) | erster (10) | erste KS (4) / dritte KS (8, 12) | kurz |
| zweiter (17) | erster (10), zweiter (18) | erste KS (4) / vierte KS (8, 15) | kurz |
| dritter (23) | vierter (22) | erste KS (4) / Empfangseinrichtung (21) | kurz |
| | weiterer (38) | | |
| vierter (25) | fünfter (25) | Empfangseinrichtung (21) / Identifikationseinrichtung (24) | kurz |
| fünfter (29) | sechster (28) | erste KS (4) / Sensoreinrichtung (27) | kurz |
| | weiterer (38) | | |
| sechster (31) | siebter (30) | erste KS (4) / interne (32) oder externe Einrichtung (33) | kurz |
| | weiterer (38) | | |
| siebter (34) | erster (10) | dritte KS (8, 12) / zweite KS (7) | lang |
| achter (20) | erster (10) | vierte KS (8, 15) / zweite KS (7) | lang |
| | dritter (19) | | |

Durch die vorliegende Erfindung kann vorzugsweise das Problem der automatischen Entriegelungsanforderung bei Annäherung des Entleerungsfahrzeuges gelöst werden. Ferner kann Personen ohne Smartphone das Öffnen des Müllcontainers (2) ermöglicht werden. Durch den vorteilhaften Einsatz einer Empfangseinrichtung (21) kann bevorzugt über eine Funkverbindung mit der Steuereinrichtung (3) kommuniziert werden. Zur Kommunikation mit der Empfangseinrichtung (21) können herkömmliche RFID-Medien eingesetzt werden, u.a. RFID-Karten, Key-Fobs, NFC-Units. Diese zusätzliche Empfangseinrichtung (21) kann auch dazu dienen, Personen mit Smartphone für die Öffnung zu identifizieren, aber nicht die Daten zum Host zu übertragen, wenn nicht gewünscht. Es kann vorteilhafterweise Sensorik (27) (z.B.: Levelsensor, Geruchssensor, Geräuschsensor, Temperatursensor, Beschleunigungssensor, Sprachsensor) zur Übermittlung von Informationen an die Steuereinrichtung (3) eingebunden werden. Schließlich kann vorteilhafterweise die Steuereinrichtung (3) diese Informationen auswerten und die Informationen weiterleiten beziehungsweise die entsprechenden Aktoren (32) ansteuern (z.B. Sperren eines Zugangs). Dadurch können drahtgebundene Lösungen vermieden werden. Es können weitere Sensoren vermieden werden, welche notwendig sind, um ein Entleeren zu erkennen. Bereits bekannte Systeme haben den Nachteil, dass ein Mehraufwand durch Verkabelung vorliegt und die Einbausituation der Bauteile eingeschränkt ist. Es besteht ein hoher Softwareaufwand für Entleeralgorythmen und die Wartung der einzelnen Systeme ist aufwändig. Es wird vorteilhafterweise ein vollintegriertes digitales Müllentsorgungssystem bereitgestellt.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: System
- 2: Müllcontainer
- 3: elektronische Steuereinrichtung
- 4: erste Kommunikationsschnittstelle
- 5: Speichereinrichtung
- 6: Server
- 7: zweite Kommunikationsschnittstelle
- 8: weitere Kommunikationsschnittstelle
- 9: weiteres Kommunikationsgerät
- 10: erster Datentransfer
- 11: erstes Kommunikationsgerät
- 12: dritte Kommunikationsschnittstelle
- 13: erster Kommunikationskanal
- 14: zweites Kommunikationsgerät
- 15: vierte Kommunikationsschnittstelle
- 16: Anzeigeeinrichtung
- 17: zweiter Kommunikationskanal
- 18: zweiter Datentransfer
- 19: dritter Datentransfer
- 20: sechster Kommunikationskanal
- 21: Empfangseinrichtung
- 22: vierter Datentransfer
- 23: dritter Kommunikationskanal
- 24: Identifikationseinrichtung
- 25: vierter Kommunikationskanal
- 26: fünfter Datentransfer
- 27: Sensoreinrichtung
- 28: sechster Datentransfer
- 29: fünfter Kommunikationskanal
- 30: siebter Datentransfer
- 31: sechster Kommunikationskanal
- 32: interne Einrichtung
- 33: externe Einrichtung
- 34: siebter Kommunikationskanal
- 35: Authentifizierungsmanager
- 36: Datenbank
- 37: Datenverarbeitungseinrichtung
- 38: weiterer Datentransfer

## Patentansprüche

1. System (1) zum Betreiben eines Müllcontainers (2) umfassend einen Müllcontainer (2), welcher eine elektronische Steuereinrichtung (3), eine erste Kommunikationsschnittstelle (4) zum Senden und Empfangen von Daten und zumindest eine interne Einrichtung (27, 32, 33) aufweist, einen von dem Müllcontainer beabstandeten Server (6), welcher eine zweite Kommunikationsschnittstelle (7) umfasst, zumindest ein weiteres Kommunikationsgerät (9, 11, 14), das nicht dem Müllcontainer (2) zugehörig ist und zumindest eine weitere Kommunikationsschnittstelle (8, 12, 15) umfasst, und ein Entleer- oder Servicefahrzeug;
wobei über die erste Kommunikationsschnittstelle (4) ein erster Datentransfer (10) zu der zumindest einen weiteren Kommunikationsschnittstelle (8, 12, 15) initiierbar ist, wobei über die erste Kommunikationsschnittstelle (4) ein weiterer Datentransfer (38) zwischen der zumindest einen internen Einrichtung (27, 32, 33) initiierbar ist, wobei der weitere Datentransfer (38) ein siebter Datentransfer (30) ist, der über einen sechsten Kommunikationskanal (31) erfolgt und unidirektional oder bidirektional ist, wobei das weitere Kommunikationsgerät (9, 11, 14) ein erstes Kommunikationsgerät (9, 11) ist, welches die weitere Kommunikationsschnittstelle in Form einer dritten Kommunikationsschnittstelle (8, 12) umfasst, wobei das Entleer- oder Servicefahrzeug mit dem ersten Kommunikationsgerät (9, 11) ausgestattet ist, wobei das erste Kommunikationsgerät (9, 11) ein Teil einer Recheneinheit des Entleer- oder Servicefahrzeug ist, wobei der erste Datentransfer (10) zwischen der ersten Kommunikationsschnittstelle (4) und der dritten Kommunikationsschnittstelle (8, 12) ein Auslöseereignis darstellt und wobei die Steuereinrichtung (3) eingerichtet ist durch eine Autorisierung des ersten Datentransfers (10) ein Vorhandensein des Entleer- oder Servicefahrzeugs zu erkennen, wobei die Steuereinrichtung (3) eingerichtet ist aufgrund des Auslöseereignisses Steuerdaten zu erzeugen, welche der internen Einrichtung (32) in Form einer Verriegelungseinrichtung mittels des siebten Datentransfers (38) bei erkanntem Vorhandensein des Entleer- oder Servicefahrzeugs übermittelbar werden, woraufhin die Verriegelungseinrichtung entriegelt, wobei die erste Kommunikationsschnittstelle (4) keine Einrichtung zur direkten Datenübertragung an die zweite Kommunikationsschnittstelle (7) aufweist, wobei der indirekte erste Datentransfer zwischen der ersten Kommunikationsschnittstelle (4) und der zweiten Kommunikationsschnittstelle (7) und/oder zwischen der zweiten Kommunikationsschnittstelle (7) und der ersten Kommunikationsschnittstelle (4) über die zumindest eine dritte Kommunikationsschnittstelle (8, 12, 15) initiierbar ist, wobei der unidirektionale oder bidirektionale erste Datentransfer (10) zwischen der ersten Kommunikationsschnittstelle (4) und der zweiten Kommunikationsschnittstelle (7) über die dritte Kommunikationsschnittstelle (8, 12) erfolgt und wobei durch die Steuereinrichtung (3) nach einer Nutzung des Müllcontainers (2) Benutzungsdaten in einer dem Müllcontainer zugehörigen Speichereinrichtung (5) ablegbar sind, wobei die gespeicherten Benutzungsdaten über den ersten Datentransfer (10) an den Server (6) übertragbar sind.

2. System nach Anspruch 1,
**dadurch gekennzeichnet, dass**
der Müllcontainer (2) zumindest eine Sensoreinrichtung (27), welche eine weitere interne Einrichtung (32) darstellt, umfasst, wobei der weitere Datentransfer ebenfalls ein sechster Datentransfer (28) ist, welcher zwischen der zumindest einen Sensoreinrichtung (27) und der ersten Kommunikationsschnittstelle (4) über einen fünften Kommunikationskanal (29) erfolgen kann, wobei der sechste Datentransfer (28) unidirektional oder bidirektional sein kann.

3. System nach Anspruch 1 oder 2,
**dadurch gekennzeichnet, dass**
die aufgrund eines Auslöseereignisses erzeugbaren Steuerdaten zumindest teilweise durch die Steuereinrichtung (3) und zumindest teilweise durch die Sensoreinrichtung (27) erzeugbar sind.

4. System nach einem der vorhergehenden Ansprüche,
**dadurch gekennzeichnet, dass**
der Datentransfer zwischen der ersten (4) und der dritten Kommunikationsschnittstelle (8, 12) über einen ersten Kommunikationskanal (13) erfolgt.

5. System nach Anspruch 3 oder 4,
**dadurch gekennzeichnet, dass**
ein zweites Kommunikationsgerät (9, 14) eine vierte Kommunikationsschnittstelle (8, 15) umfasst, wobei der unidirektionale oder bidirektionale erste Datentransfer zwischen der ersten Kommunikationsschnittstelle (4) und der zweiten Kommunikationsschnittstelle (7) über die vierte Kommunikationsschnittstelle (8, 15) erfolgen kann, wobei das zweite Kommunikationsgerät (9, 14) einem Benutzer zugeordnet ist, wobei das zweite Kommunikationsgerät (9, 14) ein portables Datenverarbeitungsgerät, bevorzugt mit einer Anzeigeeinrichtung (16), beispielsweise ein Mobiltelefon, ein Smartphone, ein Tablet oder ein Laptop ist, wobei der Transfer von Daten zwischen der ersten (4) und der vierten Kommunikationsschnittstelle (8, 15) über einen zweiten Kommunikationskanal (17) erfolgt.

6. System nach Anspruch 5,
**dadurch gekennzeichnet, dass**
zur Identifizierung eines Benutzers vor der Nutzung des Müllcontainers (2) zwischen der ersten Kommunikationsschnittstelle (4) und der vierten Kommunikationsschnittstelle (8, 15) ein zweiter Datentransfer (18) initiierbar und ein anschließender dritter Datentransfer (19) zwischen der vierten Kommunikationsschnittstelle (8, 15) und der zweiten Kommunikationsschnittstelle (7) des Servers (6) initiierbar ist, wobei der zweite Datentransfer (18) von Identifikationsdaten zwischen der ersten (4) und der vierten Kommunikationsschnittstelle (8, 15) über den zweiten Kommunikationskanal (17) erfolgt, wobei der dritte Datentransfer (19) zwischen der vierten Kommunikationsschnittstelle (8, 15) und der zweiten Kommunikationsschnittstelle (7) über einen achten Kommunikationskanal (20) erfolgt.

7. System nach einem der vorhergehenden Ansprüche,
**dadurch gekennzeichnet, dass**
der Müllcontainer (2) eine Empfangseinrichtung (21) umfasst, wobei zwischen der Empfangseinrichtung (21) und der ersten Kommunikationsschnittstelle (4) ein vierter Datentransfer (22) über einen dritten Kommunikationskanal (23) erfolgen kann, wobei der vierte Datentransfer (22) unidirektional oder bidirektional sein kann, wobei zur Identifizierung eines Benutzers vor der Nutzung des Müllcontainers (2) zwischen der Empfangseinrichtung (21) und einer Identifikationseinrichtung (24) mittels eines vierten Kommunikationskanals (25) ein fünfter Datentransfer (26) von Identifikationsdaten initiierbar ist.

8. System nach Anspruch 7,
**dadurch gekennzeichnet, dass**
der Datentransfer über die Kommunikationskanäle eins bis sechs (13, 17, 23, 25, 29,) auf einer Drahtlostechnologie beruht, wobei die Drahtlostechnologie eine Reichweite unter 300 m, bevorzugt unter 100 m, bevorzugt unter 50 m, bevorzugt unter 30 m, bevorzugt unter 10 m, bevorzugt unter 5 m, bevorzugt unter 3 m, bevorzugt unter 1 m, besonders bevorzugt unter 50 cm aufweist, wobei die Drahtlostechnologie ausgewählt ist aus einer Gruppe, die NFC-Technologie, RFID-Technologie, WLAN-Technologie, Bluetooth^{®}-Technologie und optische Übertragungstechnologie umfasst.

9. System nach einem der Ansprüche 4 bis 8,
**dadurch gekennzeichnet, dass**
der Datentransfer zwischen der dritten (8, 12) und der zweiten Kommunikationsschnittstelle (7) über einen siebten Kommunikationskanal (34) erfolgt, wobei der Datentransfer zwischen der vierten (9, 14) und der zweiten Kommunikationsschnittstelle (7) über einen achten Kommunikationskanal (20) erfolgt, wobei der siebte (34) und der achte Kommunikationskanal (20) zumindest abschnittsweise auf einer Drahtlostechnologie mit maximal einer Reichweite von über 30 m, bevorzugt über 100 m, bevorzugt über 500 m, bevorzugt über 1 km, besonders bevorzugt mehrere km basieren und eine Übertragungstechnologie, die ausgewählt ist aus einer Gruppe, die WLAN-Verbindung, Funkverbindung, Mobilfunkverbindung, 2G-Verbindung, 3G-Verbindung, GPRS-Verbindung, 4G-Verbindung, 5G-Verbindung umfasst.

10. Verfahren zum Betreiben eines Müllcontainers (2) mit einem System nach einem der vorhergehenden Ansprüche, wobei das Verfahren folgende Schritte umfasst:
- Registrieren eines Auslöseereignisses über die erste Kommunikationsschnittstelle (4) mittels des ersten Datentransfers (10) zwischen der ersten Kommunikationsschnittstelle (4) und der dritten Kommunikationsschnittstelle (8, 12);
- Generieren von zumindest einem Teil von Steuerdaten durch die Steuereinrichtung (3);
- Erkennen eines Vorhandenseins des Entleer- oder Servicefahrzeugs durch den ersten Datentransfer (10);
- Übermittlung der Steuerdaten an die interne Einrichtung (32) in Form einer Verriegelungseinrichtung mittels eines siebten Datentransfers (38), wenn das Vorhandensein des Entleer- oder Servicefahrzeugs erkannt wurde;
wobei der Datentransfer zur Registrierung des Auslöseereignisses über einen ersten Kommunikationskanal (13) erfolgt, der auf einer Drahtlostechnologie beruht.

11. Verfahren nach Anspruch 10,
**dadurch gekennzeichnet, dass**
die Drahtlostechnologie eine Reichweite unter 300 m, bevorzugt unter 100 m, bevorzugt unter 50 m, bevorzugt unter 30 m, bevorzugt unter 10 m, bevorzugt unter 5 m, bevorzugt unter 3 m, bevorzugt unter 1 m, besonders bevorzugt unter 50 cm aufweist, wobei die Drahtlostechnologie ausgewählt ist aus einer Gruppe, die NFC-Technologie, RFID-Technologie, WLAN-Technologie, Bluetooth^{®}-Technologie und optische Übertragungs-technologie umfasst.

12. Verfahren nach Anspruch 10 oder 11,
**dadurch gekennzeichnet, dass**
das Verfahren eine Datenübertragung zwischen dem Müllcontainer (2) und einem von dem Müllcontainer beabstandeten Server umfasst, welcher eine zweite Kommunikationsschnittstelle aufweist, wobei das Verfahren folgende Schritte umfasst:
- Etablieren einer Datenverbindung mittels eines Kommunikationskanals (13, 17) zwischen der ersten Kommunikationsschnittstelle (4) und einer weiteren Kommunikationsschnittstelle (8, 12, 15) eines weiteren Kommunikationsgeräts (9, 11, 14), welches kein Bestandteil des Müllcontainers (2) ist;
- Autorisieren der Datenverbindung;
- Initiieren eines indirekten ersten Datentransfers (10) zwischen der ersten Kommunikationsschnittstelle (4) und der zweiten Kommunikationsschnittstelle (7) und/oder zwischen der zweiten Kommunikationsschnittstelle (7) und der ersten Kommunikationsschnittstelle (4) über zumindest eine weitere Kommunikationsschnittstelle (8, 12, 15).

## Claims

1. System (1) for operating a waste container (2) comprising a waste container (2) which has an electronic control device (3), a first communication interface (4) for sending and receiving data and at least one internal device (27, 32, 33) , a server (6) spaced apart from the waste container, which comprises a second communication interface (7), at least one further communication device (9, 11, 14) which is not associated with the waste container (2) and comprises at least one further communication interface (8, 12, 15), and an emptying or service vehicle;
wherein
a first data transfer (10) to the at least one further communication interface (8, 12, 15) can be initiated via the first communication interface (4), wherein a further data transfer (38) between the at least one internal device (27, 32, 33), wherein the further data transfer (38) is a seventh data transfer (30), which takes place via a sixth communication channel (31) and is unidirectional or bidirectional, wherein the further communication device (9, 11, 14) is a first communication device (9, 11), which comprises the further communication interface in the form of a third communication interface (8, 12), wherein the emptying or service vehicle is equipped with the first communication device (9, 11), wherein the first communication device (9, 11) is a part of a computing unit of the emptying or service vehicle, wherein the first data transfer (10) between the first communication interface (4) and the third communication interface (8, 12) represents a triggering event and wherein the control device (3) is set up to recognise the presence of the emptying or service vehicle by authorising the first data transfer (10), wherein the control device (3) is set up to generate control data on the basis of the triggering event, which control data can be transmitted to the internal device (32) in the form of a locking device by means of the seventh data transfer (38) when the presence of the emptying or service vehicle is recognised, whereupon the locking device is unlocked , wherein the first communication interface (4) has no device for direct data transmission to the second communication interface (7), wherein the indirect first data transfer between the first communication interface (4) and the second communication interface (7) and/or between the second communication interface (7) and the first communication interface (4) can be initiated via the at least one third communication interface (8, 12, 15), wherein the unidirectional or bidirectional first data transfer (10) between the first communication interface (4) and the second communication interface (7) takes place via the third communication interface (8, 12), and wherein the control device (3) can store usage data in a storage device (5) associated with the waste container after the waste container (2) has been used, wherein the stored usage data can be transmitted to the server (6) via the first data transfer (10).

2. System according to claim 1,
**characterised in that**,
the waste container (2) comprises at least one sensor device (27), which is a further internal device (32), wherein the further data transfer is also a sixth data transfer (28), which can take place between the at least one sensor device (27) and the first communication interface (4) via a fifth communication channel (29), wherein the sixth data transfer (28) can be unidirectional or bidirectional.

3. System according to claim 1 or 2,
**characterised in that**,
the control data that can be generated due to a triggering event can be generated at least partially by the control device (3) and at least partially by the sensor device (27).

4. System according to one of the preceding claims,
**characterised in that**,
the data transfer between the first (4) and the third communication interface (8, 12) takes place via a first communication channel (13).

5. System according to claim 3 or 4,
**characterised in that**,
a second communication device (9, 14) comprises a fourth communication interface (8, 15), wherein the unidirectional or bidirectional first data transfer between the first communication interface (4) and the second communication interface (7) can take place via the fourth communication interface (8, 15), wherein the second communication device (9, 14) is assigned to a user, wherein the second communication device (9, 14) is a portable data processing device, preferably with a display device (16), for example a mobile telephone, a smartphone, a tablet or a laptop, wherein the transfer of data between the first (4) and the fourth communication interface (8, 15) takes place via a second communication channel (17).

6. System according to claim 5,
**characterised in that**,
a second data transfer (18) can be initiated between the first communication interface (4) and the fourth communication interface (8, 15) to identify a user before the waste container (2) is used and a subsequent third data transfer (19) can be initiated between the fourth communication interface (8, 15) and the second communication interface (7) of the server (6), wherein the second data transfer (18) of identification data between the first (4) and the fourth communication interface (8, 15) takes place via the second communication channel (17), wherein the third data transfer (19) between the fourth communication interface (8, 15) and the second communication interface (7) takes place via an eighth communication channel (20).

7. System according to one of the preceding claims,
**characterised in that**,
the waste container (2) comprises a receiving device (21), wherein a fourth data transfer (22) can take place between the receiving device (21) and the first communication interface (4) via a third communication channel (23), wherein the fourth data transfer (22) can be unidirectional or bidirectional, wherein a fifth data transfer (26) of identification data can be initiated between the receiving device (21) and a identification device (24) by means of a fourth communication channel (25) to identify a user before using the waste container (2).

8. System according to claim 7,
**characterised in that**,
the data transfer via the communication channels one to six (13, 17, 23, 25, 29,) is based on a wireless technology, wherein the wireless technology has a range of less than 300 m, preferably less than 100 m, preferably less than 50 m, preferably less than 30 m, preferably less than 10 m, preferably less than 5 m, preferably less than 3 m, preferably less than 1 m, particularly preferably less than 50 cm, wherein the wireless technology is selected from a group comprising NFC technology, RFID technology, WLAN technology , Bluetooth^{®} technology and optical transmission technology.

9. System according to any one of claims 4 to 8,
**characterised in that**,
the data transfer between the third (8, 12) and the second communication interface (7) takes place via a seventh communication channel (34), wherein the data transfer between the fourth (9, 14) and the second communication interface (7) takes place via an eighth communication channel (20), wherein the seventh (34) and the eighth communication channel (20) are based at least in sections on a wireless technology with a maximum range of more than 30 m, preferably more than 100 m, preferably more than 500 m, preferably more than 1 km, particularly preferably several km, and a transmission technology which is selected from a group comprising WLAN connection, radio connection, mobile radio connection, 2G connection, 3G connection, GPRS connection, 4G connection, 5G connection.

10. Method for operating a waste container (2) with a system according to one of the preceding claims, wherein the method comprises the following steps:
- registering a trigger event via the first communication interface (4) by means of the first data transfer (10) between the first communication interface (4) and the third communication interface (8, 12);
- generating of at least part of the control data by the control device (3);
- recognising the presence of the emptying or service vehicle by the first data transfer (10);
- transmission of the control data to the internal device (32) in the form of a locking device by means of a seventh data transfer (38) when the presence of the emptying or service vehicle has been recognised;
wherein the data transfer for registering the triggering event takes place via a first communication channel (13) based on wireless technology.

11. Method according to claim 10,
**characterised in that**,
the wireless technology has a range below 300 m, preferably below 100 m, preferably below 50 m, preferably below 30 m, preferably below 10 m, preferably below 5 m, preferably below 3 m, preferably below 1 m, particularly preferably below 50 cm, wherein the wireless technology is selected from a group comprising NFC technology, RFID technology, WLAN technology, Bluetooth^{®} technology and optical transmission technology.

12. Method according to claim 10 or 11,
**characterised in that**,
the method comprises data transmission between the waste container (2) and a server spaced from the waste container and having a second communication interface, the method comprising the following steps:
- establishing a data connection by means of a communication channel (13, 17) between the first communication interface (4) and a further communication interface (8, 12, 15) of a further communication device (9, 11, 14), which is not part of the waste container (2);
- authorising the data connection;
- initiating of an indirect first data transfer (10) between the first communication interface (4) and the second communication interface (7) and/or between the second communication interface (7) and the first communication interface (4) via at least one further communication interface (8, 12, 15).

## Revendications

1. Système (1) pour le fonctionnement d'un conteneur à ordures (2) comportant un conteneur à ordures (2), lequel présente un dispositif de commande électronique (3), une première interface de communication (4) pour l'envoi et la réception de données et au moins un dispositif interne (27, 32, 33), un serveur (6) distant du conteneur à ordures, lequel comporte une deuxième interface de communication (7), au moins un autre appareil de communication (9, 11, 14) qui n'appartient pas au conteneur à ordures (2) et comporte au moins une autre interface de communication (8, 12, 15), et un véhicule de vidage ou de service ;
un premier transfert de données (10) à ladite au moins une autre interface de communication (8, 12, 15) pouvant être initialisé par l'intermédiaire de la première interface de communication (4), un autre transfert de données (38) entre ledit au moins un dispositif interne (27, 32, 33) pouvant être initialisé par l'intermédiaire de la première interface de communication, l'autre transfert de données (38) étant un septième transfert de données (30) qui a lieu par l'intermédiaire d'un sixième canal de communication (31) et est unidirectionnel ou bidirectionnel, l'autre appareil de communication (9, 11, 14) étant un premier appareil de communication (9, 11), lequel comporte l'autre interface de communication sous la forme d'une troisième interface de communication (8, 12), le véhicule de vidage ou de service étant équipé du premier appareil de communication (9, 11), le premier appareil de communication (9, 11) étant une partie d'une unité de calcul du véhicule de vidage ou de service, le premier transfert de données (10) entre la première interface de communication (4) et la troisième interface de communication (8, 12) représentant un événement déclencheur et le dispositif de commande (3) étant conçu pour détecter une présence du véhicule de vidage ou de service par une autorisation du premier transfert de données (10), le dispositif de commande (3) étant conçu pour générer, sur la base de l'événement déclencheur, des données de commande, lesquelles peuvent être transmises au dispositif interne (32) sous la forme d'un dispositif de verrouillage au moyen du septième transfert de données (38) lorsque la présence du véhicule de vidage ou de service est détectée, après quoi le dispositif de verrouillage se déverrouille, la première interface de communication (4) ne présentant pas de dispositif de transmission directe de données à la deuxième interface de communication (7), le premier transfert de données indirect entre la première interface de communication (4) et la deuxième interface de communication (7) et/ou entre la deuxième interface de communication (7) et la première interface de communication (4) étant initialisé par l'intermédiaire de ladite au moins une troisième interface de communication (8, 12, 15), le premier transfert de données (10) unidirectionnel ou bidirectionnel entre la première interface de communication (4) et la deuxième interface de communication (7) ayant lieu par l'intermédiaire de la troisième interface de communication (8, 12), et des données d'utilisation pouvant être enregistrées par le dispositif de commande (3) après une utilisation du conteneur à ordures (2) dans un dispositif de mémoire (5) associé au conteneur à ordures, les données d'utilisation stockées pouvant être transférées au serveur (6) par l'intermédiaire du premier transfert de données (10).

2. Système selon la revendication 1,
**caractérisé par le fait que**
le conteneur à ordures (2) comporte au moins un dispositif de détection (27), lequel représente un autre dispositif interne (32), l'autre transfert de données étant également un sixième transfert de données (28), lequel peut avoir lieu entre ledit au moins un dispositif de détection (27) et la première interface de communication (4) par l'intermédiaire d'un cinquième canal de communication (29), le sixième transfert de données (28) pouvant être unidirectionnel ou bidirectionnel.

3. Système selon l'une des revendications 1 ou 2,
**caractérisé par le fait que**
les données de commande pouvant être générées sur la base d'un événement déclencheur peuvent être générées au moins en partie par le dispositif de commande (3) et au moins en partie par le dispositif de détection (27).

4. Système selon l'une des revendications précédentes,
**caractérisé par le fait que**
le transfert de données entre la première (4) et la troisième interface de communication (8, 12) a lieu par l'intermédiaire d'un premier canal de communication (13).

5. Système selon l'une des revendications 3 ou 4,
**caractérisé par le fait qu'**
un deuxième appareil de communication (9, 14) comporte une quatrième interface de communication (8, 15), le premier transfert de données unidirectionnel ou bidirectionnel entre la première interface de communication (4) et la deuxième interface de communication (7) pouvant avoir lieu par l'intermédiaire de la quatrième interface de communication (8, 15), le deuxième appareil de communication (9, 14) étant associé à un utilisateur, le deuxième appareil de communication (9, 14) étant un appareil de traitement de données portable, de préférence avec un dispositif d'affichage (16), par exemple un téléphone mobile, un téléphone intelligent, une tablette ou un ordinateur portable, le transfert de données entre la première (4) et la quatrième interface de communication (8, 15) ayant lieu par l'intermédiaire d'un deuxième canal de communication (17).

6. Système selon la revendication 5,
**caractérisé par le fait que**
pour l'identification d'un utilisateur avant l'utilisation du conteneur à ordures (2), un deuxième transfert de données (18) peut être initialisé entre la première interface de communication (4) et la quatrième interface de communication (8, 15) et un troisième transfert de données (19) qui suit peut être initialisé entre la quatrième interface de communication (8, 15) et la deuxième interface de communication (7) du serveur (6), le deuxième transfert de données (18) de données d'identification entre la première (4) et la quatrième interface de communication (8, 15) ayant lieu par l'intermédiaire du deuxième canal de communication (17), le troisième transfert de données (19) entre la quatrième interface de communication (8, 15) et la deuxième interface de communication (7) ayant lieu par l'intermédiaire d'un huitième canal de communication (20).

7. Système selon l'une des revendications précédentes,
**caractérisé par le fait que**
le conteneur à ordures (2) comporte un dispositif de réception (21), un quatrième transfert de données (22) pouvant avoir lieu entre le dispositif de réception (21) et la première interface de communication (4) par l'intermédiaire d'un troisième canal de communication (23), le quatrième transfert de données (22) pouvant être unidirectionnel ou bidirectionnel, un cinquième transfert de données (26) de données d'identification pouvant être initialisé entre le dispositif de réception (21) et un dispositif d'identification (24) au moyen d'un quatrième canal de communication (25) pour l'identification d'un utilisateur avant l'utilisation du conteneur à ordures (2).

8. Système selon la revendication 7,
**caractérisé par le fait que**
le transfert de données par l'intermédiaire des canaux de communication un à six (13, 17, 23, 25, 29, 31) repose sur une technologie sans fil, la technologie sans fil présentant une portée inférieure à 300 m, de préférence inférieure à 100 m, de préférence inférieure à 50 m, de préférence inférieure à 30 m, de préférence inférieure à 10 m, de préférence inférieure à 5 m, de préférence inférieure à 3 m, de préférence inférieure à 1 m, de façon particulièrement préférée inférieure à 50 cm, la technologie sans fil étant choisie dans un groupe qui comporte la technologie NFC, la technologie RFID, la technologie WLAN, la technologie Bluetooth^{®} et la technologie de transmission optique.

9. Système selon l'une des revendications 4 à 8,
**caractérisé par le fait que**
le transfert de données entre la troisième (8, 12) et la deuxième interface de communication (7) a lieu par l'intermédiaire d'un septième canal de communication (34), le transfert de données entre la quatrième (9, 14) et la deuxième interface de communication (7) ayant lieu par l'intermédiaire d'un huitième canal de communication (20), le septième (34) et le huitième canal de communication (20) étant basés, au moins par sections, sur une technologie sans fil ayant une portée maximale de plus de 30 m, de préférence de plus de 100 m, de préférence de plus de 500 m, de préférence de plus de 1 km, de façon particulièrement préférée de plusieurs km, et une technologie de transmission qui est choisie dans un groupe qui comporte une connexion WLAN, une connexion radio, une connexion mobile, une connexion 2G, une connexion 3G, une connexion GPRS, une connexion 4G, une connexion 5G.

10. Procédé de fonctionnement d'un conteneur à ordures (2) avec un système selon l'une des revendications précédentes, le procédé comprenant les étapes suivantes :
- enregistrement d'un événement déclencheur par l'intermédiaire de la première interface de communication (4) au moyen du premier transfert de données (10) entre la première interface de communication (4) et la troisième interface de communication (8, 12) ;
- génération d'au moins une partie de données de commande par le dispositif de commande (3) ;
- détection d'une présence du véhicule de vidage ou de service par le premier transfert de données (10) ;
- transmission des données de commande au dispositif interne (32) sous la forme d'un dispositif de verrouillage au moyen d'un septième transfert de données (3 lorsque la présence du véhicule de vidage ou de service a été détectée,
dans lequel le transfert de données pour l'enregistrement de l'événement déclencheur a lieu par l'intermédiaire d'un canal de communication basé sur une technologie sans fil.

11. Procédé selon la revendication 10,
**caractérisé par le fait que**
la technologie sans fil présente une portée inférieure à 300 m, de préférence inférieure à 100 m, de préférence inférieure à 50 m, de préférence inférieure à 30 m, de préférence inférieure à 10 m, de préférence inférieure à 5 m, de préférence inférieure à 3 m, de préférence inférieure à 1 m, de façon particulièrement préférée inférieure à 50 cm, la technologie sans fil étant choisie dans un groupe qui comporte la technologie NFC, la technologie RFID, la technologie WLAN, la technologie Bluetooth^{®} et la technologie de transmission optique.

12. Procédé selon l'une des revendications 10 ou 11,
**caractérisé par le fait que**
le procédé comporte une transmission de données entre le conteneur à ordures (2) et un serveur distant du conteneur à ordures, lequel comporte une deuxième interface de communication, le procédé comprenant les étapes suivantes :
- établissement d'une liaison de données au moyen d'un canal de communication (13, 17) entre la première interface de communication (4) et une autre interface de communication (8, 12, 15) d'un autre appareil de communication (9, 11, 14), lequel ne fait pas partie du conteneur à ordures (2) ;
- autorisation de la liaison de données ;
- initialisation d'un premier transfert de données indirect (10) entre la première interface de communication (4) et la deuxième interface de communication (7) et/ou entre la deuxième interface de communication (7) et la première interface de communication (4) par l'intermédiaire d'au moins une autre interface de communication (8, 12, 15).
